# EUROPEAN PATENT APPLICATION

(11) **EP 3 876 439 A1**
(43) Date of publication of application: **08.09.2021**
(21) Application number: 18940043.5
(22) Date of filing: 12.11.2018
(51) Int. Cl.: H04B 17/309

(54) **WIRELESS COMMUNICATION METHOD AND TERMINAL DEVICE**

(71) Applicant: GUANGDONG OPPO MOBILE TELECOMMUNICATIONS CORP., LTD., Dongguan, Guangdong 523860 (CN)
(72) Inventor: SHI, Cong, Dongguan, Guangdong 523860 (CN)
(74) Representative: Penza, Giancarlo
(86) International application number: PCT/CN2018/115071
(87) International publication number: WO 2020/097762

(57) **Abstract**

The embodiments of the present application provide a wireless communication method and a terminal device. Based on the prior IS and OOS reports, the US is introduced, and the RLM and RLF detection processes are designed based on the IS, OOS and US reports, ensuring the accuracy of wireless link monitoring over unlicensed spectrum, improving the accuracy of wireless link monitoring results, obtaining more accurate results of wireless link monitoring, thereby improving communication efficiency and communication quality. The wireless communication method comprises: the terminal device monitoring wireless link quality through RS over multiple RS resources; and the terminal device reporting one of IS and OOS, or one of IS, OOS, and US according to the results of the radio link quality monitoring.

## Description

### Technical Field

Embodiments of the present application relate to the field of communication, and more particularly, to a wireless communication method and a terminal device.

### Background

When a New Radio (NR) system is applied to an unlicensed frequency band, due to existence of a Listen Before Talk (LBT) mechanism, it cannot be guaranteed that the reference signals related to in sync indication (IS)/ out of sync indication (OOS) of a network device are all successfully sent, thereby affecting radio link monitoring (RLM) of a reference signal (RS) and determination of radio link failure (RLF) in the unlicensed frequency band.

### Summary

Embodiments of the present application provide a wireless communication method and a terminal device. A third state (unknown state, US) is introduced on the basis of the existing reporting of IS and OOS, and RLM and RLF monitoring procedures are designed on the basis of reporting of IS, OOS and US, which can ensure accuracy of radio link monitoring on the unlicensed spectrum, improve precision of a result of radio link monitoring, and can obtain a more accurate result of the radio link monitoring, thereby improving communication efficiency and communication quality.

In a first aspect, a wireless communication method is provided, including: monitoring, by a terminal device, radio link quality on multiple reference signal (RS) resources through an RS; reporting, by the terminal device, one of an in sync indication (IS) and an out of sync indication (OOS), or one of the IS, the OOS and a third state unknown state (US), according to a result of radio link quality monitoring.

It should be noted that the US is a state other than the IS and the OOS, so it is called the third state. Characteristic of the US is that the terminal device cannot determine the channel quality, the reason is that a network device does not send the RS due to an LBT failure.

In a second aspect, a terminal device is provided for performing the method in the above first aspect or each implementation thereof.

Specifically, the terminal device includes function modules for performing the method in the above first aspect or each implementation thereof.

In a third aspect, a terminal device is provided, including a processor and a memory. The memory is configured to store a computer program, and the processor is configured to call and run the computer program stored in the memory to perform the method in the above first aspect or each implementation thereof.

In a fourth aspect, a chip is provided, configured to implement the method in any one of the above first aspect or each implementation thereof.

Specifically, the chip includes a processor configured to call and run a computer program from a memory, causing a device on which the chip is installed to execute the method in any one of the above first aspect or each implementation thereof.

In a fifth aspect, a computer readable storage medium is provided, configured to store a computer program that causes a computer to execute the method in any one of the above first aspect or each implementation thereof.

In a sixth aspect, a computer program product is provided, including computer program instructions that cause a computer to execute the method in any one of the above first aspect or each implementation thereof.

In a seventh aspect, a computer program is provided, which, when running on a computer, causes the computer to execute the method in to any one of the above first aspect or each implementation thereof.

Through the above technical solutions, RLM and RLF monitoring procedures are designed on the basis of reporting of the IS, OOS and US, which can ensure accuracy of radio link monitoring on the unlicensed spectrum, improve precision of a result of radio link monitoring, and can obtain a more accurate result of the radio link monitoring, thereby improving communication efficiency and communication quality.

### Brief Description of Drawings

FIG. 1 is a schematic diagram of an architecture of a communication system according to an embodiment of the present application.
FIG. 2 is a schematic flowchart of performing RLM in prior art.
FIG. 3 is a schematic flowchart of a wireless communication method provided according to an embodiment of the present application.
FIG. 4 is a schematic diagram of determining RLF based on RLM according to an embodiment of the present application.
FIG. 5 is another schematic diagram of determining RLF based on RLM according to an embodiment of the present application.
FIG. 6 is a further schematic diagram of determining RLF based on RLM according to an embodiment of the present application.
FIG. 7 is a further schematic diagram of determining RLF based on RLM according to an embodiment of the present application.
FIG. 8 is a further schematic diagram of determining RLF based on RLM according to an embodiment of the present application.
FIG. 9 is a further schematic diagram of determining RLF based on RLM according to an embodiment of the present application.
FIG. 10 is a further schematic diagram of determining RLF based on RLM according to an embodiment of the present application.
FIG. 11 is a further schematic diagram of determining RLF based on RLM according to an embodiment of the present application.
FIG. 12 is a further schematic diagram of determining RLF based on RLM according to an embodiment of the present application.
FIG. 13 is a further schematic diagram of determining RLF based on RLM according to an embodiment of the present application.
FIG. 14 is a further schematic diagram of determining RLF based on RLM according to an embodiment of the present application.
FIG. 15 is a further schematic diagram of determining RLF based on RLM according to an embodiment of the present application.
FIG. 16 is a schematic block diagram of a terminal device provided by an embodiment of the present application.
FIG. 17 is a schematic block diagram of a communication device provided by an embodiment of the present application.
FIG. 18 is a schematic block diagram of a chip provided by an embodiment of the present application.
FIG. 19 is a schematic block diagram of a communication system provided by an embodiment of the present application.

### Detailed Description

Technical solutions in embodiments of the present application will be described below with reference to the drawings in the embodiments of the present application. It is apparent that the embodiments described are just some of the embodiments of the present application, but not all of the embodiments of the present application. According to the embodiments of the present application, all other embodiments achieved by a person of ordinary skill in the art without making inventive efforts are within the protection scope of the present application.

Embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced long term evolution (LTE-A) system, a New Radio (NR) system, an evolution system of NR system, an LTE-based access to unlicensed spectrum (LTE-U) system, an NR-based access to unlicensed spectrum (NR-U) system, a Universal Mobile Telecommunications System (UMTS), Wireless Local Area Networks (WLAN), Wireless Fidelity (WiFi), a next generation communication system or other communication systems, etc.

Generally speaking, a traditional communication system supports a limited number of connections and is easy to be implemented. However, with a development of communication technology, a mobile communication system will not only support traditional communication, but also support, for example, Device to Device (D2D) communication, Machine to Machine (M2M) communication, Machine Type Communication (MTC), and Vehicle to Vehicle (V2V) communication. And embodiments of the present application may also be applied to these communication systems.

Optionally, a communication system in an embodiment of the present application may be applied to a Carrier Aggregation (CA) scenario, a Dual Connectivity (DC) scenario, and a Standalone (SA) network deployment scenario.

Embodiments of the present application do not limit applied spectrums. For example, embodiments of the present application may be applied to both licensed spectrum and unlicensed spectrum.

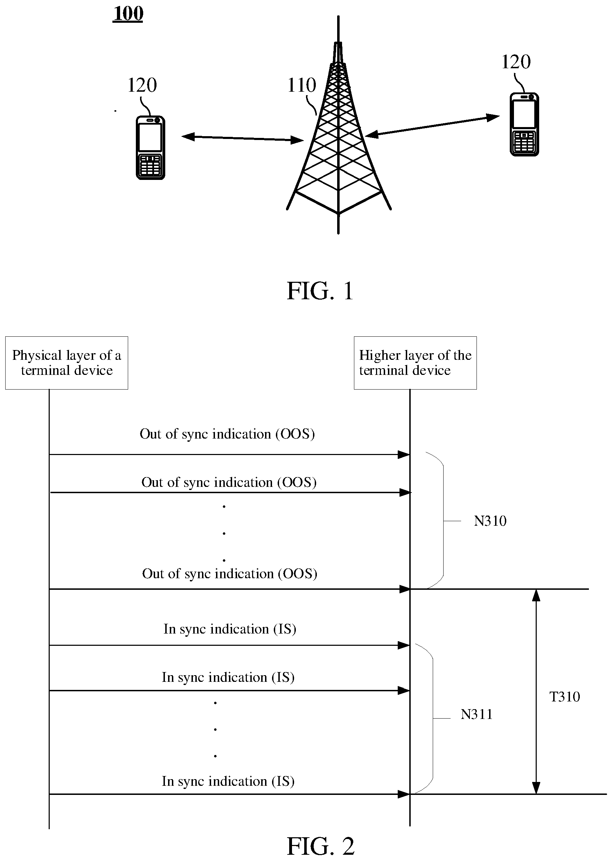

Illustratively, a communication system 100 applied in an embodiment of the present application is shown in FIG. 1. The communication system 100 may include a network device 110, and the network device 110 may be a device that communicates with a terminal device 120 (or referred to as a communication terminal, or a terminal). The network device 110 may provide communication coverage for a specific geographical area, and may communicate with terminal devices located within the coverage area.

FIG. 1 shows one network device and two terminal devices as an example. Optionally, the wireless communication system 100 may include multiple network devices, and other quantities of terminal devices may be included within the coverage area of each network device, which is not limited in the embodiments of the present application.

Optionally, the communication system 100 may include other network entities, such as a network controller, and a mobile management entity, which is not limited in the embodiments of the present application.

It should be understood that a device with a communication function in a network/system in the embodiments of the present application may be referred to as a communication device. Taking the communication system 100 shown in FIG. 1 as an example, the communication device may include a network device 110 and a terminal device 120 which have communication functions, and the network device 110 and the terminal device 120 may be the specific devices described above, and will not be described herein again. The communication device may also include other devices in the communication system 100, such as a network controller, a mobile management entity, and other network entity, and which is not limited in the embodiments of the present application.

Embodiments of the present application describe various embodiments in combination with a terminal device and a network device. Herein the terminal device may also be referred to as a User Equipment (UE), an access terminal, a subscriber unit, a subscriber station, a mobile station, a rover platform, a remote station, a remote terminal, a mobile device, a user terminal, a terminal, a wireless communication device, a user agent, or a user device, etc. The terminal may be a STATION (ST) in a WLAN, a cellular phone, a cordless phone, a Session Initiation Protocol (SIP) phone, a Wireless Local Loop (WLL) station, a Personal Digital Assistant (PDA) device, a handheld device with a wireless communication function, a computing device or other processing devices connected to a wireless modem, an vehicle-mounted device, a wearable device, and a next generation communication system, such as, a terminal device in an NR network, or a terminal device in a future evolving Public Land Mobile Network (PLMN), etc.

As an example but not a limitation, in an embodiment of the present application, the terminal device may also be a wearable device. The wearable device may also be referred to as a wearable smart device, which is a general term for wearable devices intelligently designed and developed for daily wear by applying the wearable technology, such as glasses, gloves, watches, clothing and shoes, etc. The wearable device is a portable device that is worn directly on the body or integrated into clothes or accessories of users. The wearable device is not only a hardware device, but also realize powerful functions through software support, data interaction and cloud interaction. A generalized wearable smart device has a full-function, a large size, may implement complete or partial functions without relying on a smart phone, such as smart watches or smart glasses, etc., or a generalized wearable smart devices only focus on a certain kind of application functions, and needs to be used in conjunction with other devices such as a smart phone, such as various smart bracelets and smart jewelry for monitoring physical signs.

The network device may be a device for communicating with a mobile device, or may be an Access Point (AP) in the WLAN, or a Base Transceiver Station (BTS) in GSM or CDMA, or may be a NodeB (NB) in WCDMA, or an Evolutional Node B (eNB or eNodeB) in Long Term Evolution (LTE), or a relay station or an access point, or an vehicle-mounted device, a wearable device, and a network device (gNB) in an NR network, or a network device in a future evolved PLMN network, etc.

In an embodiment of the present application, the network device provides services for a cell, and the terminal device communicates with the network device through a transmission resource (e.g., frequency domain resource or spectrum resource) used by the cell. The cell may be a cell corresponding to the network device (e.g., a base station), and the cell may belong to a macro base station or a base station corresponding to a Small cell which here may include a Metro cell, a Micro cell, a Pico cell, a Femto cell, etc. These small cells have characteristics of small coverage and low transmission power, and are suitable for providing high-speed data transmission services.

Licensed spectrum: due to limited resources of radio electromagnetic waves, there are strict regulations on division and usage of radio electromagnetic waves in the world. Licensed spectrum is a partial spectrum of radio electromagnetic wave in the frequency domain. Licensed spectrum is strictly restricted and protected, and only authorized users and their devices meeting the specifications are allowed to access, and the users have to pay for it. At present, public security, railway, civil aviation, radio and television, telecommunications and other important departments all own a certain licensed spectrums, and communications between devices in these departments run on the licensed spectrum thereof, especially in the telecommunications industry, mobile phones we use every day communicate through the licensed spectrum owned by operators, and the three major operators all have special frequency bands licensed by national radio administration bureau to ensure that public mobile communication is not interfered.

Unlicensed spectrum: the unlicensed spectrum is a spectrum that can be accessed and used by devices that meet certain specifications and standards. However, the unlicensed spectrum must be guaranteed not to bring interference to other users. Typically, wireless-fidelity (WIFI) and Bluetooth, which we often use, are transmitted through the unlicensed spectrum. Industrial scientific medical (ISM) frequency bands defined once by the Radio Communication Bureau of the International Telecommunication Union, which is mainly open to industrial, scientific and medical institutions, without authorization and license, and of course, it is necessary to observe certain transmission power and not bring interference to other frequency bands.

On the licensed spectrum, the terminal device in an access network will continuously monitor a downlink reference signal configured by a network device to evaluate a connection state of a link with the network device, that is, perform radio link monitoring (RLM). The downlink reference signal may include one or more of a channel state information-reference signal (CSI-RS), a cell-specific reference signal (CRS), a positioning reference signal (PRS) and a demodulation reference signal (DMRS). Of course, the terminal device may further perform the RLM described above by using a synchronization signal block (SSB) sent by the network device.

It should be noted that the SSB may also be referred to as a synchronization signal/physical broadcast channel block (SS/PBCH block). For example, when Reference Signal Receiving Power (RSRP) and/or Reference Signal Receiving Quality (RSRQ) of the CSI-RS received by the terminal device is lower than a set threshold value, it is considered that there is Radio Link Failure (RLF) between the terminal device and the network device, that is, the link quality is poor, and the terminal device needs to re-perform a random access procedure to re-establish a connection of a network link with the network device.

Specifically, as shown in FIG. 2, FIG. 2 is a schematic diagram of a terminal device performing radio connection monitoring on licensed spectrum in the LTE. As shown in FIG. 2, when a physical layer of the terminal device consecutively reports N310 OOSs to a higher layer, a timer (or a timing counter) T310 is started. If the physical layer of the terminal device consecutively reports N311 ISs before the timer T310 times out (expires), it is considered that a radio link between the terminal device and a network device has been recovered. Otherwise, it is considered that the radio link between the terminal device and the network device has failed, and after the timer T310 times out, the terminal device performs a re-connection of the radio link with the network device. The physical layer of the terminal device will also inform the higher layer (RRC layer) of the terminal device of whether RSRP/RSRQ/Signal to Interference plus Noise Ratio (SINR) of the detected downlink reference signal meets a threshold value. When the RSRP/RSRQ/SINR of the downlink reference signal is lower than the threshold value, an out of sync indication (OOS) is reported to the higher layer, and when the RSRP/RSRQ/SINR of the downlink reference signal is equal to or higher than the threshold value, an in sync indication (IS) is reported to the higher layer. When the terminal device is configured with multiple downlink reference signals for radio link monitoring, the OOS is reported. When the terminal device is configured with multiple downlink reference signals for radio link monitoring, when the physical layer of the terminal device detects that RSRP/RSRQ/SINR of at least one downlink reference signal is higher than or equal to the threshold value, then the IS is reported. When the number of OOSs consecutively reported by the physical layer of the terminal device reaches a certain threshold value, the timer (or the timing counter) T310 is started. If the physical layer of the terminal device consecutively detects N311 ISs before the timer T310 times out (expires), it is considered that a radio link between the terminal device and the network device has been recovered. That is, when the number of ISs sent by the physical layer of the terminal device to the higher layer reaches a certain threshold value within a duration of the T310, it is considered that the radio link between the terminal device and the network device has been recovered.

RLM mechanism and basic workflow in NR are similar to those in the LTE, except that in the NR two sets of different detection thresholds may be set to correspond to different service types.

On the unlicensed spectrum, based on the principle of fair competition, a network device or terminal device needs to listen, such as listen before talk (LBT) or clear channel assessment (CCA), for a channel competition, when accessing and using the unlicensed frequency band. The network device or terminal device can use (preempt) the frequency band (channel) and then send information and data only when the frequency band is clear and not occupied by another network device or terminal device.

The terminal device or network device may compete for the right to use the channel through the LBT, that is, the network device or terminal device may use the channel to send data within channel occupancy time (COT) time. Since on the unlicensed spectrum, a periodic downlink reference signal configured for the terminal device cannot be guaranteed to be sent on preset time-frequency resources. For example, within the COT time, a downlink reference signal may be sent on the preconfigured time-frequency resource. However, except the COT time, it is difficult to guarantee that the downlink reference signal is sent on the preconfigured time-frequency resource. The network device will send information of the COT (a start and end position of the COT, etc.) to the terminal device through a control signaling. The control signaling may be a downlink (DL) identification signal, or a request to send (RTS) signaling/clear to send (CTS) signaling, or a group-common physical downlink control channel (group-common PDCCH), or the like.

It should be noted that the COT may also be referred as to a transmission opportunity (TXOP).

The terminal device performs RLM by using the downlink reference signal detected within the COT time. For example, a radio link between the terminal device and the network device is monitored by using downlink reference signals detected within the COT time according to a similar procedure as shown in FIG. 2. Since the number of downlink reference signals detected within the COT time is limited, accuracy of monitoring the radio link between the terminal device and the network device by the terminal device by using the downlink reference signals detected within the COT time is not good, and a case of misjudgment may occur. Therefore, in the unlicensed spectrum, due to the limitation of the COT, how to effectively and reliably perform the RLM by using downlink reference signals has become an urgent problem to be solved.

Based on the above problems, the present application provides a wireless communication method, in which a third state (unknown state, US) is introduced on the basis of the existing reporting of IS and OOS, and RLM and RLF monitoring procedures are designed on the basis of reporting of the IS, OOS and US. The wireless communication method can ensure an accuracy of radio link monitoring on the unlicensed spectrum, improve a precision of a result of radio link monitoring, and can acquire a more accurate result of the radio link monitoring, thereby improve communication efficiency and communication quality.

It should be noted that characteristic of the third state (US) is that the terminal device cannot judge the channel quality, because the network device does not send reference signals (RS) due to an LBT failure.

The wireless communication method provided by the present application will be explained in detail below.

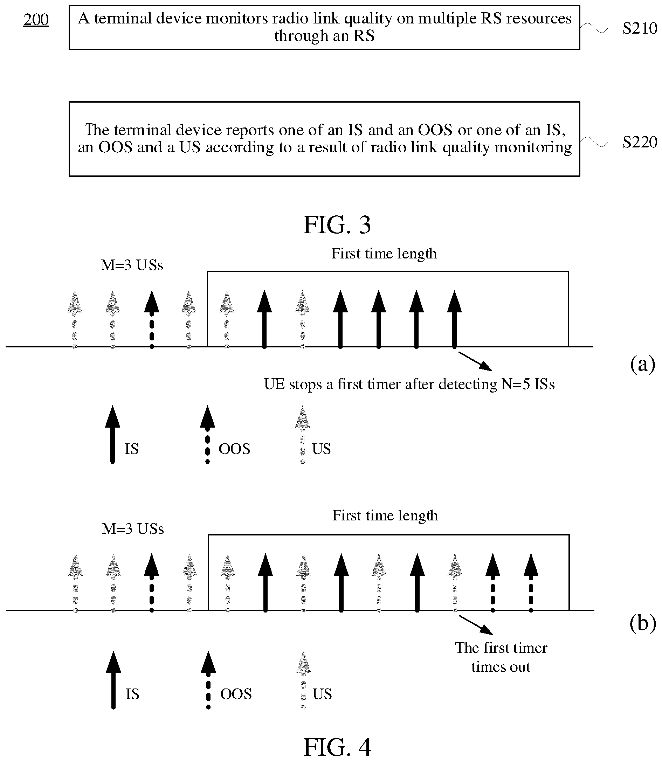

FIG. 3 is a schematic flowchart of a wireless communication method 200 according to an embodiment of the present application. As shown in the FIG. 3, the method 200 may include the following acts S210-S220.

In act S210, a terminal device monitors radio link quality on multiple RS resources through an RS.

In act S220, the terminal device reports one of an IS and an OOS or one of an IS, an OOS and a US according to a result of radio link quality monitoring.

It should be noted that characteristic of the third state (US) is that the terminal device cannot judge a channel quality, because the network device does not send the reference signal (RS) due to an LBT failure.

It should be understood that in an embodiment of the present application, each of the RSs used for monitoring appears periodically. For a periodically appeared RS, when determining the radio link quality based on this RS, the terminal device may evaluate the channel quality by using multiple measurement values within a specific time, or only by using a single measurement value.

Optionally, in an embodiment of the present application, multiple RS resources may be configured at the terminal device. For example, the network device may configure the multiple RS resources for the terminal device through configuration information.

It should be noted that the terminal device in an access network will continuously monitor a downlink reference signal configured by a network device to evaluate a connection state of a link with the network device, that is, perform a radio link monitoring (RLM) operation.

Optionally, the RS may include one or more of CSI-RS, CRS, PRS and DMRS. Of course, the terminal device may also perform the above RLM operation by using the SSB sent by the network device.

It should be noted that an approach for the terminal device to monitor the radio link quality through the RS may refer to reflecting the radio link quality with a measured value by measuring the RS. Particularly, SINR, RSRQ, RSRP or the like may be measured. At present, a standard used by the terminal device to judge radio link quality is a BLER value. Generally, the terminal device will determine an association relationship by itself, and then use different measured values to correspond to different BLER values. For example, the measured values of SINR are associated with BLER. Assuming that the measured values of SINR are a, b and c, the terminal device may determine that a BLER value corresponding to a is 2%, a BLER value corresponding to b is 10%, and a BLER value corresponding to c is 80%. Of course, the terminal device may also directly use the measured values of SINR, RSRQ, RSRP, etc. to reflect the radio link quality. For example, a measured result of the RS (SINR/RSRQ/RSRP) is higher than a first threshold value which is defined as a value associated with these measurements.

Optionally, in an embodiment of the present application, the terminal device may report one of the IS, OOS and US through the following modes one to four.

### Mode one

A physical layer of the terminal device reports the IS to a higher layer of the terminal device if the radio link quality is monitored to be better than a first threshold value on at least one RS resource of the multiple RS resources. Or, the physical layer of the terminal device reports the OOS to the higher layer of the terminal device if the radio link quality is monitored to be worse than a second threshold value on all RS resources of the multiple RS resources and the radio link quality is monitored to be better than a third threshold value on at least one RS resource of the multiple RS resources. Or, the physical layer of the terminal device reports the US to the higher layer of the terminal device if the radio link quality is monitored to be worse than the third threshold value on all RS resources of the multiple RS resources.

### Mode two

A physical layer of the terminal device reports the IS to a higher layer of the terminal device if at least one RS is detected out in the multiple RS resources and the radio link quality is monitored to be better than a first threshold value on the at least one RS resource. Or, the physical layer of the terminal device reports the OOS to the higher layer of the terminal device if at least one RS is detected in the multiple RS resources and the radio link quality is monitored to be worse than a second threshold value on all RS resources on which the RS is detected. Or, the physical layer of the terminal device reports the US to the higher layer of the terminal device if no RS is detected out in the multiple RS resources.

It should be noted that in the mode two above, at least one RS resource may be an RS resource set of the detected at least one RS.

### Mode three

A physical layer of the terminal device reports the IS to a higher layer of the terminal device if the radio link quality is monitored to be better than a first threshold value on at least one RS resource of the multiple RS resources. Or, the physical layer of the terminal device reports the OOS to the higher layer of the terminal device if the radio link quality is monitored to be worse than a second threshold value on all RS resources of the multiple RS resources and the radio link quality is monitored to be better than a third threshold value on the all RS resources. Or, the physical layer of the terminal device reports the US to the higher layer of the terminal device if the radio link quality is monitored to be worse than the second threshold value on all RS resources of the multiple RS resources and the radio link quality is monitored to be worse than the third threshold value on at least one RS resource. Mode four

A physical layer of the terminal device reports the IS to a higher layer of the terminal device if at least one RS is detected in the multiple RS resources and the radio link quality is monitored to be better than a first threshold value on the at least one RS resource. Or, the physical layer of the terminal device reports the OOS to the higher layer of the terminal device if the RS is detected on all RS resources of the multiple RS resources and the radio link quality is monitored to be worse than a second threshold value on the all RS resources. Or, the physical layer of the terminal device reports the US to the higher layer of the terminal device if the RS is detected on partial RS resources of the multiple RS resources and the radio link quality is monitored to be worse than the second threshold value on all RS resources on which the RS is detected.

It should be noted that in the mode four described above, at least one RS resource may be an RS resource set of the detected at least one RS.

It should be noted that, in the modes one to four described above, the US should correspond to a case in which no RS can be monitored, but may also correspond to a case that the signal is not sent through measurement, specifically the measured value is found to be too low which reflects that the channel quality is too poor.

Optionally, in the modes one to four, the BLER is better than a certain threshold when the BLER is used, which means that the BLER is less than or equal to a certain BLER threshold; the SINR/RSRQ/RSRP is better than a certain threshold when the SINR, RSRQ or RSRP is used, which means that the SINR/RSRQ/RSRP is greater than or equal to a certain SINR/RSRQ/RSRP threshold.

Optionally, in the mode two and/or mode four described above, the detecting at least one RS in the multiple RS resources includes: in the multiple RS resources, at least one RS of which the measured value is greater than a fourth threshold value is detected. That is, it is detected that there is at least one RS in the multiple RS resources, of which the measured value is larger than the fourth threshold value.

Optionally, in the mode two and/or mode four described above, the detecting the RS on all RS resources of the multiple RS resources includes a measured value of the RS detected on each of all RS resources in the multiple RS resources is greater than the fourth threshold value.

Optionally, the fourth threshold value is preconfigured, or indicated by a network device through broadcast or radio resource control (RRC) signaling. Optionally, the fourth threshold value is represented by a value of one of the following: block error rate (BLER), signal to interference plus noise ratio (SINR), reference signal receiving quality (RSRQ), reference signal receiving power (RSRP), and received signal strength indication (RSSI).

Optionally, in the mode one and/or mode three described above, at least one of the first threshold value, the second threshold value and the third threshold value is represented by a value of one of the following: BLER, SINR, RSRQ, RSRP and RSSI.

Optionally, in the mode one and/or mode three described above, at least one of the first threshold value, the second threshold value and the third threshold value is preconfigured, or indicated by a network device through broadcast or radio resource control (RRC) signaling.

Optionally, in the mode one and/or the mode three described above, multiple first values are preconfigured at the terminal device, and a network device indicates that one of the multiple first values is at least one of the first threshold value, the second threshold value and the third threshold value through one of broadcast, RRC signaling, Medium Access Control Control Element (MAC CE) and Downlink Control Information (DCI).

Optionally, in the above mode two and/or mode four, the first threshold value and/or the second threshold value are represented by a value of one of the following: BLER, SINR, RSRQ, RSRP and RSSI.

Optionally, in the above-mentioned mode two and/or mode four, the first threshold value and/or the second threshold value are preconfigured or indicated by a network device through broadcast or RRC signaling.

Optionally, in the above-mentioned mode two and/or mode four, multiple first values are preconfigured at the terminal device, and a network device indicates that one of the multiple first values is the first threshold value and/or the second threshold value through one of broadcast, RRC signaling, MAC CE and DCI.

Optionally, in an embodiment of the present application, the terminal device may report one of the IS and OOS through the following modes five to eight.

### Mode five

A physical layer of the terminal device reports the IS to a higher layer of the terminal device if the radio link quality is monitored to be better than a first threshold value on at least one RS resource of the multiple RS resources. Or, the physical layer of the terminal device reports the OOS to the higher layer of the terminal device if the radio link quality is monitored to be worse than a second threshold value on all RS resources of the multiple RS resources and the radio link quality is monitored to be better than a third threshold value on at least one RS resource of the multiple RS resources.

### Mode six

A physical layer of the terminal device reports the IS to a higher layer of the terminal device if at least one RS is detected in the multiple RS resources and the radio link quality is monitored to be better than a first threshold value on the at least one RS resource. Or, the physical layer of the terminal device reports the OOS to the higher layer of the terminal device if at least one RS is detected in the multiple RS resources and the radio link quality is monitored to be worse than a second threshold value on all RS resources on which the RS is detected.

It should be noted that in the mode six above, at least one RS resource may be an RS resource set of the detected at least one RS.

### Mode seven

A physical layer of the terminal device reports the IS to a higher layer of the terminal device if the radio link quality is monitored to be better than a first threshold value on at least one RS resource of the multiple RS resources. Or, the physical layer of the terminal device reports the OOS to the higher layer of the terminal device if the radio link quality is monitored to be worse than a second threshold value on all RS resources of the multiple RS resources and the radio link quality is monitored to be better than a third threshold value on the all RS resources.

### Mode eight

A physical layer of the terminal device reports the IS to a higher layer of the terminal device if at least one RS is detected in the multiple RS resources and the radio link quality is monitored to be better than a first threshold value on the at least one RS resource. Or, the physical layer of the terminal device reports the OOS to the higher layer of the terminal device if the RS is detected on all RS resources of the multiple RS resources and the radio link quality is monitored to be worse than a second threshold value on the all RS resources.

It should be noted that, in the modes five to eight described above, the US should correspond to a case in which no RS can be monitored, but may correspond to a case that the signal is not sent through measurement, specifically the measured value is found to be too low which reflects that the channel quality is too poor.

Optionally, in the modes five to eight described above, the BLER is better than a certain threshold when the BLER is used, which means that the BLER is less than or equal to a certain BLER threshold; the SINR/RSRQ/RSRP is better than a certain threshold when the SINR, RSRQ or RSRP is used, which means that the SINR/RSRQ/RSRP is greater than or equal to a certain SINR/RSRQ/RSRP threshold.

Optionally, in the mode six and/or mode eight described above, the detecting at least one RS in the multiple RS resources includes in the multiple RS resources, at least one RS of which the measured value is greater than a fourth threshold value is detected. That is, it is detected that there is at least one RS in the multiple RS resources, of which the measured value is larger than the fourth threshold value.

Optionally, in the mode six and/or mode eight described above, the detecting the RS out on all RS resources in the multiple RS resources includes: a measured value of the RS detected on each of all RS resources of the multiple RS resources is greater than the fourth threshold value.

Optionally, the fourth threshold value is preconfigured, or indicated by a network device through broadcast or a radio resource control (RRC) signaling. Optionally, the fourth threshold value is represented by a value of one of the following: BLER, SINR, RSRQ, RSRP and RSSI.

Optionally, in the mode five and/or mode seven described above, at least one of the first threshold value, the second threshold value and the third threshold value is represented by a value of one of the following: BLER, SINR, RSRQ, RSRP and RSSI.

Optionally, in the mode five and/or mode seven described above, at least one of the first threshold value, the second threshold value and the third threshold value is preconfigured, or indicated by a network device through broadcast or radio resource control (RRC) signaling.

Optionally, in the mode five and/or the mode seven described above, multiple first values are preconfigured at the terminal device, and a network device indicates that one of the multiple first values is at least one of the first threshold value, the second threshold value and the third threshold value through one of broadcast, RRC signaling, MAC CE and DCI.

Optionally, in the mode six and/or mode eight described above, the first threshold value and/or the second threshold value are represented by a value of one of the following: BLER, SINR, RSRQ, RSRP and RSSI.

Optionally, in the mode six and/or mode eight described above, the first threshold value and/or the second threshold value are preconfigured or indicated by a network device through broadcast or RRC signaling.

Optionally, in the mode six and/or the mode eight described above, multiple first values are preconfigured at the terminal device, and a network device indicates that one of the multiple first values is the first threshold value and/or the second threshold value through one of broadcast, RRC signaling, MAC CE and DCI.

Optionally, in an embodiment of the present application, whether RLF occurs may also be judged based on the RLM.

Optionally, as example one, when the physical layer of the terminal device reports M USs and does not report IS and/or OOS among the M USs, the terminal device starts a first timer, wherein the first timer enters a timeout state after being started for a first time length; and the terminal device determines whether a radio link failure (RLF) occurs according to the first timer.

Optionally, in the example one, M is preconfigured, or indicated by a network device through broadcast or RRC signaling.

Optionally, in the example one, multiple third values are preconfigured at the terminal device, and a network device indicates that one of the multiple third values is the M through one of broadcast, RRC signaling, MAC CE and DCI.

Optionally, in the example one, the first time length is preconfigured, or indicated by a network device through broadcast or RRC signaling.

Optionally, in the example one, multiple third values are preconfigured at the terminal device, and a network device indicates that one of the multiple third values is the first time length through one of broadcast, RRC signaling, MAC CE and DCI.

It should be noted that third values corresponding to the M and the first time length may be identical or different.

Optionally, in the example one, the terminal device may determine whether the RLF occurs in the following modes.

### Mode A

If the physical layer of the terminal device reports N ISs within the first time length and does not report the OOS and/or US among the N ISs, the terminal device stops the first timer and determines that the RLF does not occur; or if the first timer times out, the terminal device determines that the RLF occurs.

### Mode B

If the physical layer of the terminal device reports N ISs within the first time length and the N ISs are consecutive, the terminal device stops the first timer and determines that the RLF does not occur; or if the first timer times out, the terminal device determines that the RLF occurs.

It should be noted that the N consecutive ISs means that the physical layer of the terminal device does not report other indication information in a gap between any two reported ISs in the N ISs, for example, no OOS or US is reported.

### Mode C

If the physical layer of the terminal device reports N ISs and/or OOSs within the first time length and does not report the US among the N ISs and/or OOSs, the terminal device stops the first timer and determines that the RLF does not occur; or if the first timer times out, the terminal device determines that the RLF occurs.

### Mode D

If the physical layer of the terminal device reports N ISs and/or OOSs within the first time length, the terminal device stops the first timer and determines that the RLF does not occur; or if the first timer times out, the terminal device determines that the RLF occurs.

Optionally, in the example one, specifically, in the modes A to D described above, N is preconfigured, or indicated by a network device through broadcast or RRC signaling.

Optionally, in the example one, specifically, in the e modes A to D described above, multiple second values are preconfigured at the terminal device, and a network device indicates that one of the multiple first values is N through one of broadcast, RRC signaling, MAC CE and DCI.

Optionally, in the example one, if the first timer times out, the terminal device determines that a first event has occurred, and reports the first event to a network device, wherein the first event refers to detecting that radio link quality is unknown or detecting that a radio link is currently unavailable. The terminal device receives first configuration information sent by the network device after reporting the first event, wherein the first configuration information is used for configuring a new bandwidth part (BWP) for the terminal device, or the first configuration information is used for indicating the terminal device to switch from a current BWP to a first BWP.

Optionally, if the first configuration information is used for configuring a new BWP for the terminal device, the terminal device starts to work on the new BWP after receiving the first configuration information.

Optionally, if the first configuration information is used for indicating the terminal device to switch from the current BWP to the first BWP, the terminal device switches from the current BWP to the first BWP after receiving the first configuration information.

Optionally, the first BWP is preconfigured, or the first BWP is an initial BWP.

Optionally, in the example one, if the first timer times out, the terminal device determines that a first event has occurred, and reports the first event to a network device, wherein the first event refers to detecting that radio link quality is unknown or detecting that a radio link is currently unavailable. The terminal device receives second configuration information sent by the network device after reporting the first event, wherein the second configuration information is used for configuring a new carrier for the terminal device, or the second configuration information is used for indicating the terminal device to switch from a current carrier to a first carrier.

Optionally, if the second configuration information is used for configuring a new carrier for the terminal device, the terminal device starts to work on the new carrier after receiving the second configuration information.

Optionally, if the first configuration information is used for instructing the terminal device to switch from the current carrier to the first carrier, the terminal device switches from the current carrier to the first carrier after receiving the second configuration information.

Optionally, the first carrier is preconfigured, or the first carrier is a primary carrier.

Optionally, as example two, when the physical layer of the terminal device reports P OOSs and does not report the IS among the P OOSs, the terminal device starts a second timer, wherein the second timer enters a timeout state after being started for a second time length; the terminal device determines whether radio link failure (RLF) occurs according to the second timer.

Optionally, in the example two, the terminal device may determine whether the RLF occurs in the following modes.

### Mode E

If the physical layer of the terminal device reports Q ISs within the second time length and does not report the OOS among the Q ISs, the terminal device stops the second timer and determines that the RLF does not occur; or if the second timer times out, the terminal device determines that the RLF occurs.

### Mode F

If the physical layer of the terminal device reports Q ISs within the second time length and the Q ISs are consecutive, the terminal device stops the second timer and determines that the RLF does not occur; or if the second timer times out, the terminal device determines that the RLF occurs.

It should be noted that the Q consecutive ISs means that the physical layer of the terminal device does not report other indication information in a gap between any two reported ISs in the Q ISs, for example, no OOS or US is reported.

Optionally, as example three,
when the physical layer of the terminal device reports P OOSs and the P OOSs are consecutive, the terminal device starts a second timer, wherein the second timer enters a timeout state after being started for a second time length; the terminal device determines whether radio link failure (RLF) occurs according to the second timer.

It should be noted that the P consecutive OOSs means that the physical layer of the terminal device does not report other indication information in a gap between any two reported OOSs in the P OOSs, for example, no IS or US is reported.

Optionally, in the example three, the terminal device may determine whether the RLF occurs in the following modes.

### Mode G

If the physical layer of the terminal device reports Q ISs within the second time length and does not report the OOS among the Q ISs, the terminal device stops the second timer and determines that the RLF does not occur; or if the second timer times out, the terminal device determines that the RLF occurs.

### Mode H

If the physical layer of the terminal device reports Q ISs within the second time length and the Q ISs are consecutive, the terminal device stops the second timer and determines that the RLF does not occur; or if the second timer times out, the terminal device determines that the RLF occurs.

It should be noted that the Q consecutive ISs means that the physical layer of the terminal device does not report other indication information in a gap between any two reported ISs in the Q ISs, for example, no OOS or US is reported.

Optionally, in the example two and the example three described above, P is preconfigured, or indicated by a network device through broadcast or RRC signaling.

Optionally, in the example two and the example three described above, multiple fifth values are preconfigured at the terminal device, and a network device indicates that one of the multiple fifth values is P through one of broadcast, RRC signaling, MAC CE and DCI.

Optionally, in the example two and the example three described above, the second time length is preconfigured, or indicated by a network device through broadcast or RRC signaling.

Optionally, in the example two and the example three described above, multiple fifth values are preconfigured at the terminal device, and a network device indicates that one of the multiple fifth values is the second time length through one of broadcast, RRC signaling, MAC CE and DCI.

Optionally, in the example two and the example three described above, Q is preconfigured, or indicated by a network device through broadcast or RRC signaling.

Optionally, in the example two and the example three described above, multiple fourth values are preconfigured at the terminal device, and a network device indicates that one of the multiple fourth values is Q through one of broadcast, RRC signaling, MAC CE and DCI.

It should be noted that fifth values corresponding to P and the second time length may be identical or different.

Optionally, in an embodiment of the present application, before the terminal device monitors the radio link quality through the RS on the multiple RS resources, the terminal device receives third configuration information sent by a network device, the third configuration information is used for configuring the multiple RS resources.

The following describes how the terminal device determines whether the RLF occurs based on the RLM in combination with some specific embodiments.

Optionally, as embodiment one, as shown in FIG. 4, when M=3, N=5, a physical layer of a terminal device (UE) reports 3 USs, and the physical layer of the UE does not report the IS among the 3 USs, then the UE starts a first timer. In (a) of FIG. 4, the UE detects 5 ISs within a first time length, and the physical layer of the UE does not report the OOS among the 5 ISs, then the UE stops the first timer. In (b) of FIG. 4, the first timer times out, that is, if the UE does not detect 5 ISs within the first time length, the UE determines that the RLF occurs.

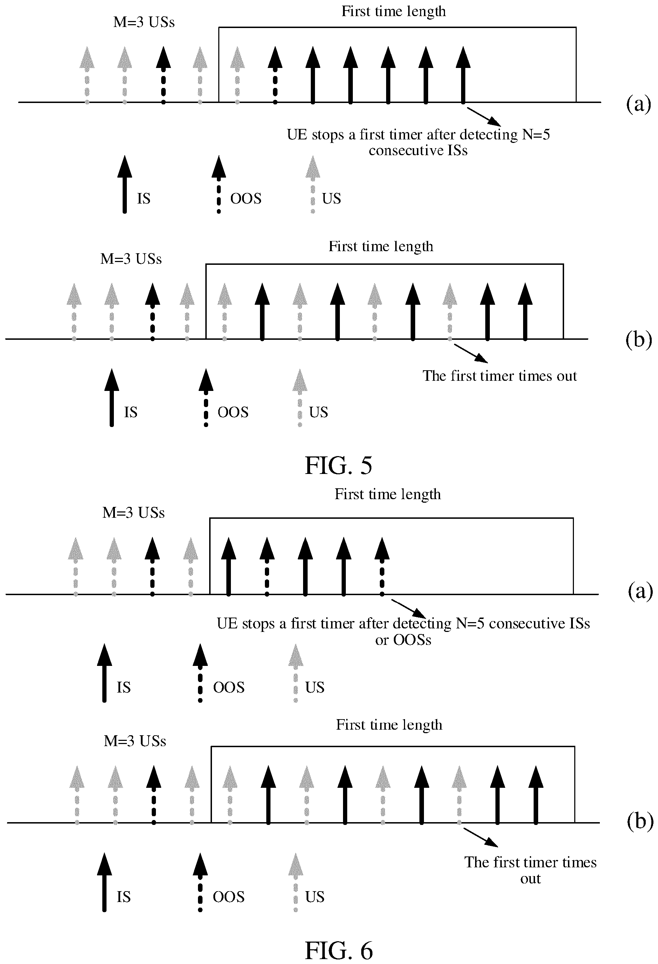

Optionally, as embodiment two, as shown in FIG. 5, when M=3, N=5, a physical layer of a UE reports 3 USs, and the physical layer of the UE does not report the IS among the 3 USs, the UE starts a first timer. In (a) of FIG. 5, if the UE detects 5 ISs within a first time length and the 5 ISs are consecutive, the UE stops the first timer. In (b) of FIG. 5, the first timer times out, that is, if the UE does not detect 5 consecutive ISs within the first time length, the UE determines that the RLF occurs.

Optionally, as embodiment three, as shown in FIG. 6, when M=3, N=5, a physical layer of a UE reports 3 USs, and the physical layer of the UE does not report the IS among the 3 USs, the UE starts a first timer. In (a) of FIG. 6, the UE detects 5 ISs and/or OOSs (3 ISs and 2 OOSs) within a first time length, and the physical layer of the UE does not report the US among the 5 ISs and/or OOSs, then the UE stops the first timer. In (b) of FIG. 6, the first timer times out, the UE determines that the RLF occurs.

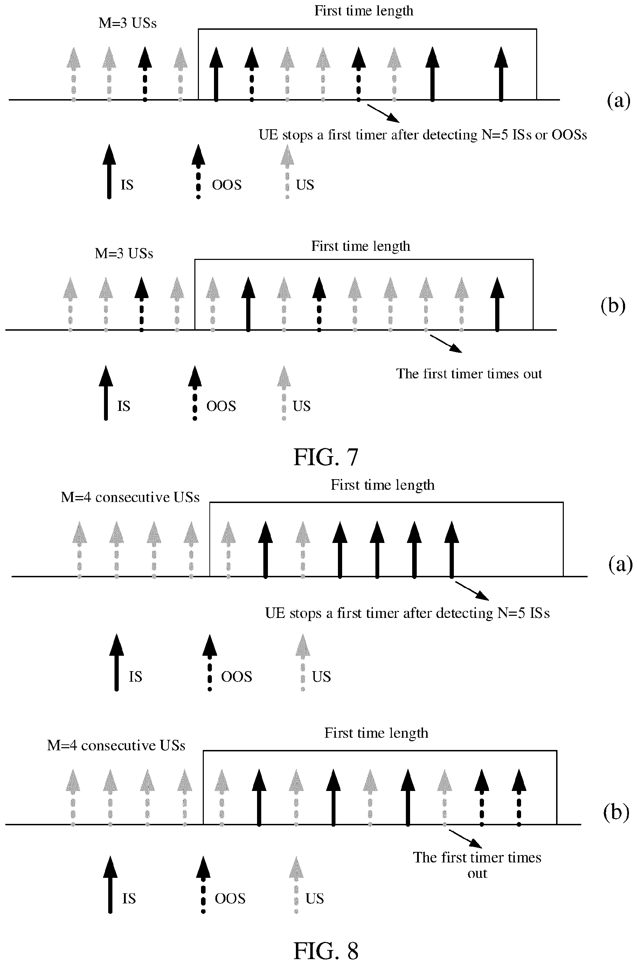

Optionally, as embodiment four, as shown in FIG. 7, when M=3, N=5, a physical layer of a UE reports 3 USs, and the physical layer of the UE does not report the IS among the 3 USs, the UE starts a first timer. In (a) of FIG. 7, the UE detects 5 ISs and/or OOSs (3 ISs and 2 OOSs) within a first time length, then the UE stops the first timer. In (b) of FIG. 7, the first timer times out, the UE determines that the RLF occurs.

Optionally, as embodiment five, as shown in FIG. 8, when M=4, N=5, a physical layer of a UE reports 4 USs, and the physical layer of the UE does not report the IS and/or OOS among the 4 USs, then the UE starts a first timer. In (a) of FIG. 8, the UE detects 5 ISs within a first time length, and the physical layer of the UE does not report the OOS among the 5 ISs, then the UE stops the first timer. In (b) of FIG. 8, the first timer times out, the UE determines that the RLF occurs.

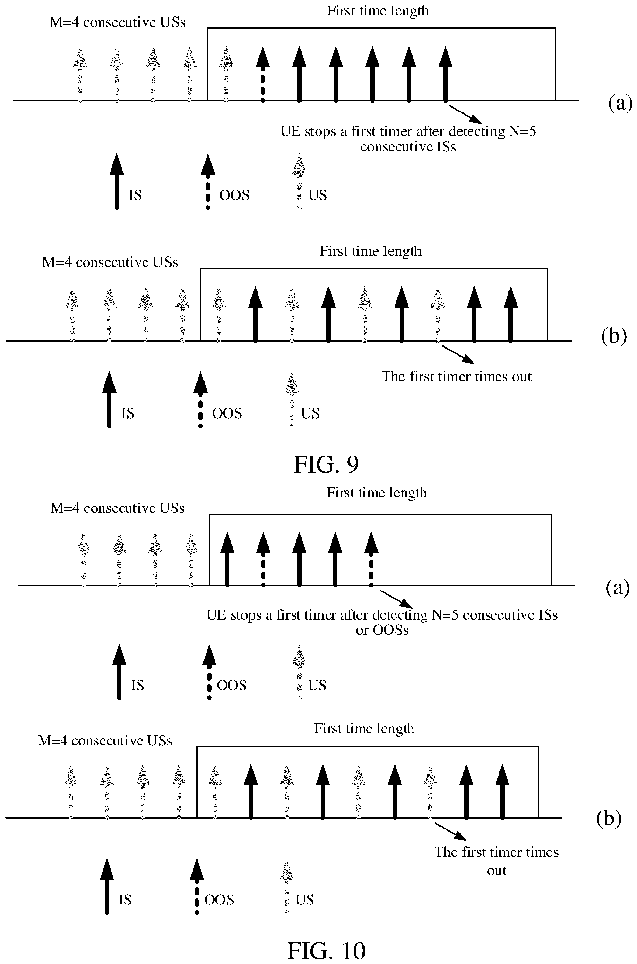

Optionally, as embodiment six, as shown in FIG. 9, when M=4, N=5, a physical layer of a UE reports 4 USs, and the physical layer of the UE does not report the IS and/or OOS among the 4 USs, then the UE starts a first timer. In (a) of FIG. 9, if the UE detects 5 ISs within a first time length and the 5 ISs are consecutive, then the UE stops the first timer. In (b) of FIG. 9, the first timer times out, the UE determines that the RLF occurs.

Optionally, as embodiment seven, as shown in FIG. 10, when M=4, N=5, a physical layer of a UE reports 4 USs, and the physical layer of the UE does not report the IS and/or OOS among the 4 USs, then the UE starts a first timer. In (a) of FIG. 10, the UE detects 5 ISs and/or OOSs (3 ISs and 2 OOSs) within a first time length, and the physical layer of the UE does not report the US among the 5 ISs and/or OOSs, then the UE stops the first timer. In (b) of FIG. 10, the first timer times out, the UE determines that the RLF occurs.

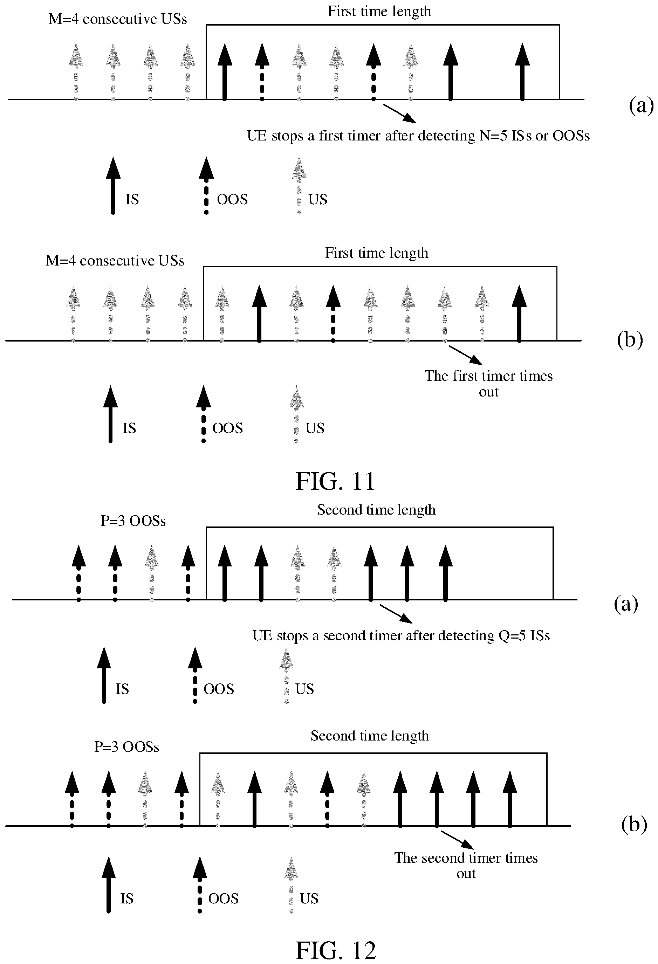

Optionally, as embodiment eight, as shown in FIG. 11, when M=4, N=5, a physical layer of a UE reports 4 USs, and the physical layer of the UE does not report the IS and/or OOS among the 4 USs, then the UE starts a first timer. In (a) of FIG. 11, the UE detects 5 ISs and/or OOSs (3 ISs and 2 OOSs) within a first time length, then the UE stops the first timer. In (b) of FIG. 11, the first timer times out, the UE determines that the RLF occurs.

It should be noted that in the embodiments one to eight described above, the first timer enters a timeout state after being started for the first time length.

Optionally, as embodiment nine, as shown in FIG. 12, when P=3 and Q=5, a physical layer of a UE reports 3 OOSs, and the physical layer of the UE does not report the IS among the three OOSs, then the UE starts the second timer. In (a) of FIG. 12, the UE detects 5 ISs within a second time length, and the physical layer of the UE does not report the OOS among the 5 ISs, then the UE stops the second timer. In (b) of FIG. 12, the second timer times out, the UE determines that the RLF occurs.

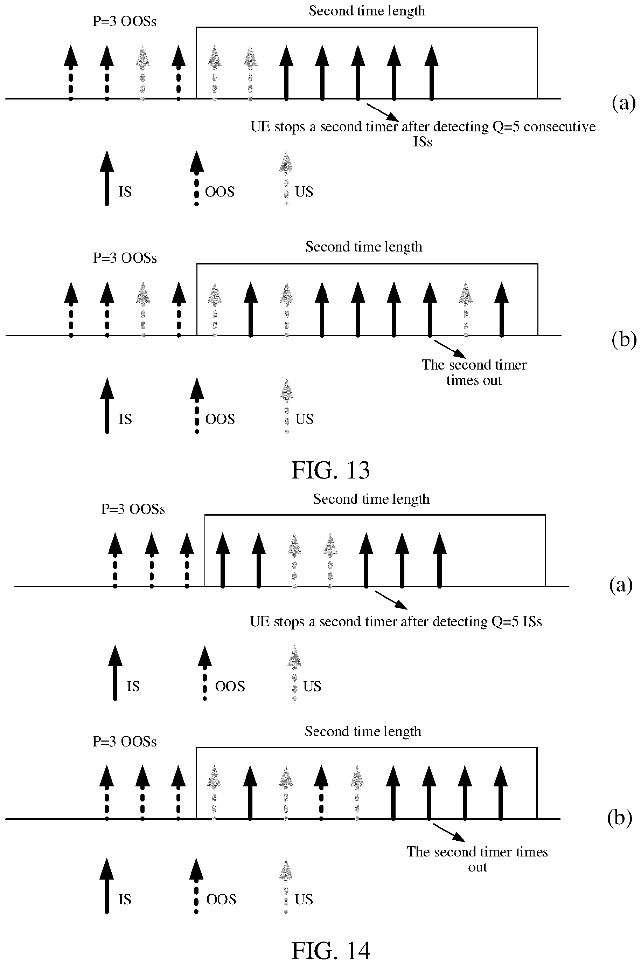

Optionally, as embodiment ten, as shown in FIG. 13, when P=3 and Q=5, a physical layer of a UE reports 3 OOSs, and the physical layer of the UE does not report the IS among the 3 OOSs, then the UE starts the second timer. In (a) of FIG. 13, if the UE detects 5 ISs within a second time length and the 5 ISs are consecutive, then the UE stops the second timer. In (b) of FIG. 13, the second timer times out, the UE determines that the RLF occurs.

Optionally, as embodiment eleven, as shown in FIG. 14, when P=3 and Q=5, a physical layer of a UE reports 3 OOSs, and the 3 OOSs are consecutive, then the UE starts a second timer. In (a) of FIG. 14, the UE detects 5 ISs within a second time length, and the physical layer of the UE does not report the OOS among the 5 ISs, then the UE stops the second timer. In (b) of FIG. 14, the second timer times out, the UE determines that the RLF occurs.

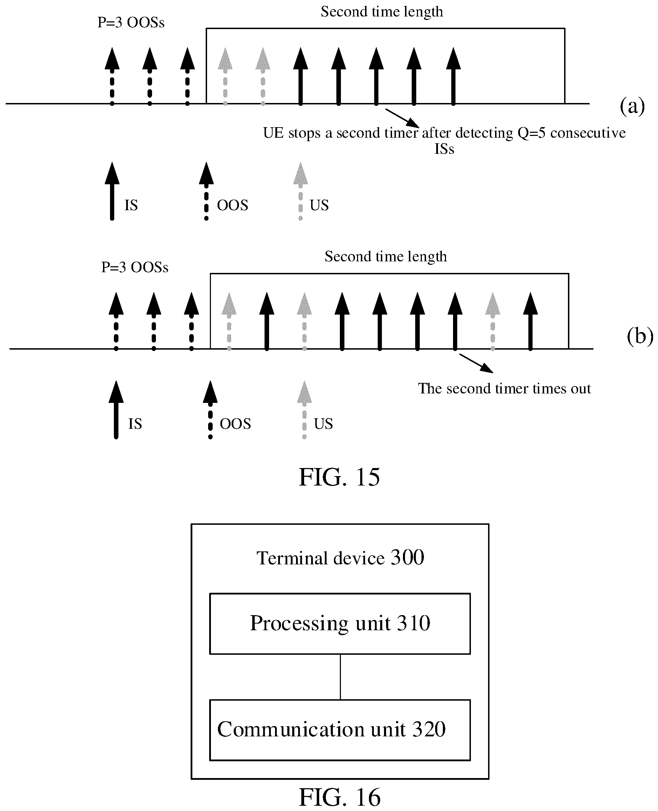

Optionally, as embodiment twelve, as shown in FIG. 15, when P=3 and Q=5, a physical layer of a UE reports 3 OOSs, and the 3 OOSs are consecutive, then the UE starts a second timer. In (a) of FIG. 15, if the UE detects 5 ISs within a second time length and the 5 ISs are consecutive, then the UE stops the second timer. In (b) of FIG. 15, the second timer times out, the UE determines that the RLF occurs.

It should be noted that in the embodiments nine to twelve described above, the second timer enters a timeout state after being started for the second time length.

Therefore, in an embodiments of the present application, a third state (unknown state, US) is introduced on the basis of the existing reporting of the IS and OOS, and RLM and RLF monitoring procedures are designed on the basis of reporting of the IS, OOS and US, which can ensure accuracy of radio link monitoring on the unlicensed spectrum, improve precision of a result of radio link monitoring, and can obtain a more accurate result of the radio link monitoring, thereby improve communication efficiency and communication quality.

FIG. 16 shows a schematic block diagram of a terminal device 300 according to an embodiment of the present application. As shown in FIG. 16, the terminal device 300 includes a processing unit 310 and a communication unit 320.

The processing unit 310 is configured to monitor radio link quality on multiple reference signal (RS) resources through an RS.

The communication unit 320 is configured to report one of an in sync indication (IS) and an out of sync indication (OOS), or one of the IS, the OOS and a third state unknown state (US), according to a result of radio link quality monitoring.

Optionally, the communication unit 320 is specifically configured to, report, by a physical layer of the terminal device, the IS to a higher layer of the terminal device if the radio link quality is monitored to be better than a first threshold value on at least one RS resource of the multiple RS resources; or report, by the physical layer of the terminal device, the OOS to the higher layer of the terminal device if the radio link quality is monitored to be worse than a second threshold value on all RS resources of the multiple RS resources and the radio link quality is monitored to be better than a third threshold value on at least one RS resource of the multiple RS resources; or report, by the physical layer of the terminal device, the US to the higher layer of the terminal device if the radio link quality is monitored to be worse than the third threshold value on all RS resources of the multiple RS resources.

Optionally, the communication unit 320 is specifically configured to, report, by a physical layer of the terminal device, the IS to a higher layer of the terminal device if at least one RS is detected in the multiple RS resources and the radio link quality is monitored to be better than a first threshold value on the at least one RS resource; or report, by the physical layer of the terminal device, the OOS to the higher layer of the terminal device if at least one RS is detected in the multiple RS resources and the radio link quality is monitored to be worse than a second threshold value on all RS resources on which the RS is detected; or report, by the physical layer of the terminal device, the US to the higher layer of the terminal device if no RS is detected in the multiple RS resources.

Optionally, the communication unit 320 is specifically configured to, report, by a physical layer of the terminal device, the IS to a higher layer of the terminal device if the radio link quality is monitored to be better than a first threshold value on at least one RS resource of the multiple RS resources; or report, by the physical layer of the terminal device, the OOS to the higher layer of the terminal device if the radio link quality is monitored to be worse than a second threshold value on all RS resources of the multiple RS resources and the radio link quality is monitored to be better than a third threshold value on the all RS resources; or report, by the physical layer of the terminal device, the US to the higher layer of the terminal device if the radio link quality is monitored to be worse than the second threshold value on all RS resources of the multiple RS resources and the radio link quality is monitored to be worse than the third threshold value on at least one RS resource.

Optionally, the communication unit 320 is specifically configured to, report, by a physical layer of the terminal device, the IS to a higher layer of the terminal device if at least one RS is detected in the multiple RS resources and the radio link quality is monitored to be better than a first threshold value on the at least one RS resource; or report, by the physical layer of the terminal device, the OOS to the higher layer of the terminal device if the RS is detected on all RS resources of the multiple RS resources and the radio link quality is monitored to be worse than a second threshold value on the all RS resources; or report, by the physical layer of the terminal device, the US to the higher layer of the terminal device if the RS is detected on partial RS resources of the multiple RS resources and the radio link quality is monitored to be worse than the second threshold value on all RS resources on which the RS is detected.

Optionally, the communication unit 320 is specifically configured to, report, by a physical layer of the terminal device, the IS to a higher layer of the terminal device if the radio link quality is monitored to be better than a first threshold value on at least one RS resource of the multiple RS resources; or report, by the physical layer of the terminal device, the OOS to the higher layer of the terminal device if the radio link quality is monitored to be worse than a second threshold value on all RS resources of the multiple RS resources and the radio link quality is monitored to be better than a third threshold value on at least one RS resource.

Optionally, the communication unit 320 is specifically configured to, report, by a physical layer of the terminal device, the IS to a higher layer of the terminal device if at least one RS is detected in the multiple RS resources and the radio link quality is monitored to be better than a first threshold value on the at least one RS resource; or report, by the physical layer of the terminal device, the OOS to the higher layer of the terminal device if at least one RS is detected in the multiple RS resources and the radio link quality is monitored to be worse than a second threshold value on all RS resources on which the RS is detected.

Optionally, the communication unit 320 is specifically configured to, report, by a physical layer of the terminal device, the IS to a higher layer of the terminal device if the radio link quality is monitored to be better than a first threshold value on at least one RS resource of the multiple RS resources; or report, by the physical layer of the terminal device, the OOS to the higher layer of the terminal device if the radio link quality is monitored to be worse than a second threshold value on all RS resources of the multiple RS resources and the radio link quality is monitored to be better than a third threshold value on the all RS resources.

Optionally, the communication unit 320 is specifically configured to, report, by a physical layer of the terminal device, the IS to a higher layer of the terminal device if at least one RS is detected in the multiple RS resources and the radio link quality is monitored to be better than a first threshold value on the at least one RS resource; or report, by the physical layer of the terminal device, the OOS to the higher layer of the terminal device if the RS is detected on all RS resources of the multiple RS resources and the radio link quality is monitored to be worse than a second threshold value on the all RS resources.

Optionally, the detecting at least one RS in the multiple RS resources includes: at least one RS in the multiple RS resources of which the measured value is greater than a fourth threshold value is detected; or detecting the RS on all RS resources of the multiple RS resources includes a measured value of the RS detected on each of all RS resources in the multiple RS resources is greater than the fourth threshold value.

Optionally, the fourth threshold value is preconfigured, or indicated by a network device through broadcast or RRC signaling.

Optionally, the fourth threshold value is represented by a value of one of the following: BLER, SINR, RSRQ, RSRP and RSSI.

Optionally, at least one of the first threshold value, the second threshold value and the third threshold value is represented by a value of one of the following: BLER, SINR, RSRQ, RSRP and RSSI.

Optionally, at least one of the first threshold value, the second threshold value and the third threshold value is preconfigured, or indicated by a network device through broadcast or RRC signaling.

Optionally, multiple first values are preconfigured at the terminal device, and a network device indicates that one of the multiple first values is at least one of the first threshold value, the second threshold value and the third threshold value through one of broadcast, RRC signaling, MAC CE and DCI.

Optionally, the first threshold value and/or the second threshold value are represented by a value of one of the following: BLER, SINR, RSRQ, RSRP and RSSI. Optionally, the first threshold value and/or the second threshold value are preconfigured or indicated by a network device through broadcast or RRC signaling.

Optionally, multiple first values are preconfigured at the terminal device, and a network device indicates that one of the multiple first values is the first threshold value and/or the second threshold value through one of broadcast, RRC signaling, MAC CE and DCI.

Optionally, the processing unit 310 is further configured to, if the physical layer of the terminal device reports M USs and does not report the IS and/or OOS among the M USs, start a first timer, wherein the first timer enters a timeout state after being started for a first time length; and determine whether radio link failure (RLF) occurs according to the first timer.

Optionally, the processing unit 310 is specifically configured to, if the physical layer of the terminal device reports N ISs within the first time length and does not report the OOS and/or US among the N ISs, stop the first timer and determine that the RLF does not occur; or if the first timer times out, determine that the RLF occurs.

Optionally, the processing unit 310 is specifically configured to, if the physical layer of the terminal device reports N ISs within the first time length and the N ISs are consecutive, stop the first timer and determine that the RLF does not occur; or if the first timer times out, determine that the RLF occurs.

Optionally, the processing unit 310 is specifically configured to, if the physical layer of the terminal device reports N ISs and/or OOSs within the first time length and does not report the US among the N ISs and/or OOSs, stop the first timer and determine that the RLF does not occur; or if the first timer times out, determine that the RLF occurs.

Optionally, the processing unit 310 is specifically configured to, if the physical layer of the terminal device reports N ISs and/or OOSs within the first time length, stop the first timer and determine that the RLF does not occur; or if the first timer times out, determine that the RLF occurs.

Optionally, if the first timer times out, the processing unit 310 is further configured to determine that a first event has occurred, and control the communication unit 320 to report the first event, wherein the first event refers to detecting that radio link quality is unknown or detecting that a radio link is currently unavailable; after the communication unit 320 reports the first event, the communication unit 320 is further configured to receive first configuration information, wherein the first configuration information is used for configuring a new bandwidth part (BWP) for the terminal device, or the first configuration information is used for indicating the terminal device to switch from a current BWP to a first BWP.

Optionally, if the first configuration information is used for configuring a new BWP for the terminal device, the processing unit 310 is further configured to start to work on the new BWP after the communication unit 320 receives the first configuration information.

Optionally, if the first configuration information is used for indicating the terminal device to switch from the current BWP to the first BWP, the processing unit 310 is further configured to determine to switch from the current BWP to the first BWP after the communication unit 320 receives the first configuration information.

Optionally, the first BWP is preconfigured, or the first BWP is an initial BWP.

Optionally, if the first timer times out, the processing unit 310 is further configured to determine that a first event has occurred, and control the communication unit 320 to report the first event, wherein the first event refers to detecting that radio link quality is unknown or detecting that a radio link is currently unavailable; after the communication unit 320 reports the first event, the communication unit 320 is further configured to receive second configuration information, wherein the second configuration information is used for configuring a new carrier for the terminal device, or the second configuration information is used for indicating the terminal device to switch from a current carrier to a first carrier.

Optionally, if the second configuration information is used for configuring a new carrier for the terminal device, the processing unit 310 is further configured to start to work on the new carrier after the communication unit 320 receives the second configuration information.

Optionally, if the first configuration information is used for indicating the terminal device to switch from the current carrier to the first carrier, the processing unit 310 is further configured to determine to switch from the current carrier to the first carrier after the communication unit 320 receives the second configuration information.

Optionally, the first carrier is preconfigured, or the first carrier is a primary carrier.

Optionally, N is preconfigured, or indicated by a network device through broadcast or RRC signaling.

Optionally, multiple second values are preconfigured at the terminal device, and a network device indicates that one of the multiple first values is the N through one of broadcast, RRC signaling, MAC CE and DCI.

Optionally, M and/or the first time length are preconfigured, or indicated by a network device through broadcasting or RRC signaling.

Optionally, multiple third values are preconfigured at the terminal device, and a network device indicates that one of the multiple third values is M and/or the first time length through one of broadcast, RRC signaling, MAC CE and DCI.

Optionally, the processing unit 310 is further configured to, if the physical layer of the terminal device reports P OOSs and does not report the IS among the P OOSs, start a second timer, wherein the second timer enters a timeout state after being started for a second time length; and determine whether radio link failure (RLF) occurs according to the second timer.

Optionally, the processing unit 310 is further configured to, if the physical layer of the terminal device reports P OOSs and the P OOSs are consecutive, start a second timer, wherein the second timer enters a timeout state after being started for a second time length; and determine whether radio link failure (RLF) occurs according to the second timer.

Optionally, the processing unit 310 is specifically configured to, if the physical layer of the terminal device reports Q ISs within the second time length and does not report the OOS among the Q ISs, stop the second timer and determine that the RLF does not occur; or if the second timer times out, determine that the RLF occurs.

Optionally, the processing unit 310 is specifically configured to, if the physical layer of the terminal device reports Q ISs within the second time length and the Q ISs are consecutive, stop the second timer and determine that the RLF does not occur; or if the second timer times out, determine that the RLF occurs.

Optionally, Q is preconfigured, or indicated by a network device through broadcast or RRC signaling.

Optionally, multiple fourth values are preconfigured at the terminal device, and a network device indicates that one of the multiple fourth values is Q through one of broadcast, RRC signaling, MAC CE and DCI.

Optionally, P and/or the second time length are preconfigured, or are indicated by a network device through broadcasting or RRC signaling.

Optionally, multiple fifth values are preconfigured at the terminal device, and a network device indicates that one of the multiple fifth values is P and/or the second time length through one of broadcast, RRC signaling, MAC CE and DCI.

Optionally, before the processing unit 310 monitors the radio link quality through the RS on the multiple RS resources, the communication unit 320 is further configured to receive third configuration information for configuring the multiple RS resources.

It should be understood that the terminal device 300 according to an embodiment of the present application may correspond to the terminal device in the method embodiment of the present application, and the above and other operations and/or functions of various units in the terminal device 300 are respectively for implementing corresponding processes of the terminal device in the method 200 shown in FIG. 3, which will not be repeated here again for sake of conciseness.

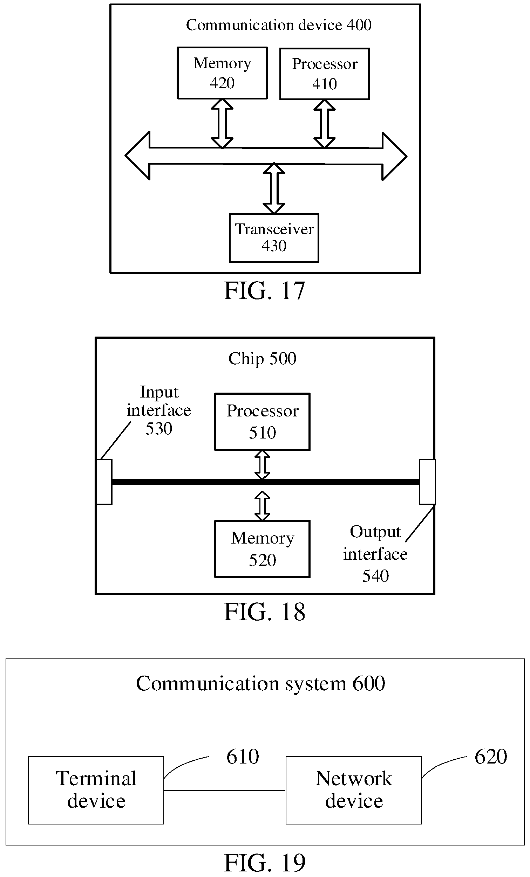

FIG. 17 is a schematic structure diagram of a communication device 400 provided by an embodiment of the present application. The communication device 400 shown in FIG. 17 includes a processor 410. The processor 410 may call and run a computer program from a memory to implement the methods in the embodiments of the present application.

Optionally, as shown in FIG. 17, the communication device 400 may further include a memory 420. Herein, the processor 410 may call and run a computer program from the memory 420 to implement the method in an embodiment of the present application.

In the above, the memory 420 may be a separate device independent of the processor 410 or may be integrated in the processor 410.

Optionally, as shown in FIG. 17, the communication device 400 may further include a transceiver 430, and the processor 410 may control the transceiver 430 to communicate with other devices. Specifically, the transceiver 430 may send information or data to other devices or receive information or data sent by other devices.

The transceiver 430 may include a transmitter and a receiver. The transceiver 430 may further include antennas, and the number of antennas may be one or more.

Optionally, the communication device 400 may be specifically a mobile terminal/terminal device of an embodiment of the present application, and the communication device 400 may implement corresponding procedures implemented by the mobile terminal/terminal device in various methods of embodiments of the present application, and this will not be repeated here again for brevity.

FIG. 18 is a schematic diagram of structure of a chip according to an embodiment of the present application. A chip 500 shown in FIG. 18 includes a processor 510. The processor 510 may call and run a computer program from a memory to implement the method in an embodiment of the present application.

Optionally, as shown in FIG. 18, the chip 500 may further include a memory 520. Herein, the processor 510 may call and run a computer program from the memory 520 to implement the method in an embodiment of the present application.

The memory 520 may be a separate device independent of the processor 510 or may be integrated in the processor 510.

Optionally, the chip 500 may further include an input interface 530. The processor 510 may control the input interface 530 to communicate with other devices or chips. Specifically, the processor 510 may acquire information or data sent by other devices or chips.

Optionally, the chip 500 may further include an output interface 540. The processor 510 may control the output interface 540 to communicate with other devices or chips. Specifically, the processor 510 may output information or data to other devices or chips.

Optionally, the chip may be applied in the network device in the embodiment of the present application, and the chip may implement the corresponding processes implemented by the network device in various methods of the embodiment of the present application, which will not be repeated herein again for brevity.

Optionally, the chip may be applied in a mobile terminal/terminal device of an embodiment of the present application, and the chip may implement the corresponding procedures implemented by the mobile terminal/terminal device in various methods of embodiments of the present application, and this will not be repeated here again for brevity.

It should be understood that the chip mentioned in an embodiment of the present application may be referred to as a system-level chip, a system chip, a chip system or a system-on-chip, etc.

FIG. 19 is a schematic block diagram of a communication system 600 provided by an embodiment of the present application. As shown in FIG. 19, the communication system 600 may include a terminal device 610 and a network device 620.

The terminal device 610 may be configured to implement the corresponding functions implemented by the terminal device in the above methods, and the network device 620 may be configured to implement the corresponding functions implemented by the network device in the above methods, which will not be repeated herein again for brevity.

It should be understood that, the processor in an embodiment of the present application may be an integrated circuit chip having a signal processing capability. In an implementation process, the steps of the foregoing method embodiments may be implemented by using an integrated logic circuit of hardware in the processor or instructions in a form of software. The processor may be a general purpose processor, a digital signal processor (Digital Signal Processing, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor may implement or perform methods, steps and logical block diagrams disclosed in the embodiment of the present application. The general purpose processor may be a microprocessor, or the processor may also be any conventional processor or the like. The steps of the method disclosed with reference to an embodiment of the present application may be directly implemented by a hardware decoding processor, or may be implemented by a combination of hardware and software modules in the decoding processor. The software modules may be located in a memory medium commonly used in the art, such as a random access memory, a flash memory, a read-only memory, a programmable read-only memory or an electrically erasable programmable memory, or a register. The storage medium is located in the memory, and the processor reads the information in the memory and completes the acts of the above method in combination with its hardware.

It may be understood that, the memory in the embodiment of the present application may be a volatile memory or a non-volatile memory, or may include both a volatile memory and a non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), and is used as an external cache. Through exemplary but not limitative description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories in the systems and methods described in this specification are intended to include, but are not limited to, these and any memory of another proper type.

It should be understood that, the foregoing memory is an example for illustration but should not be construed as a limitation. For example, the memory in the embodiments of the present application may further be a static RAM (SRAM), a dynamic RAM (DRAM), a Synchronous DRAM (SDRAM), a double data rate SDRAM (DDR SDRAM), an enhanced SDRAM (ESDRAM), a synch link DRAM (SLDRAM), a Direct Rambus RAM (DR RAM), or the like. That is, memories in the embodiments of the present application are intended to include, but are not limited to, these and any other suitable types of memories.

An embodiment of the present application further provides a computer readable storage medium configured to store a computer program.

Optionally, the computer readable storage medium may be applied in a network device of the embodiment of the present application, and the computer program causes a computer to perform corresponding processes implemented by the network device in various methods of the embodiments of the present application, which will not be repeated here again for brevity.

Optionally, the computer readable storage medium may be applied in a mobile terminal/terminal device of an embodiment of the present application, and the computer program enables the computer to perform corresponding processes implemented by the mobile terminal/terminal device in various methods of embodiments of the present application, and this will not be repeated here again for brevity.

An embodiment of the present application further provides a computer program product, including computer program instructions.

Optionally, the computer program product may be applied in a network device of the embodiment of the present application, and the computer program instructions cause a computer to perform corresponding processes implemented by the network device in various methods of the embodiments of the present application, which will not be repeated here again for brevity.

Optionally, the computer program product may be applied in a mobile terminal/terminal device of the embodiment of the present application, and the computer program instructions enable the computer to perform corresponding processes implemented by the mobile terminal/terminal device in various methods of embodiments of the present application, and this will not be repeated here again for brevity.

An embodiment of the present application also provides a computer program.

Optionally, the computer program may be applied in the network device of the embodiment of the present application. The computer program, when running on a computer, causes the computer to perform the corresponding processes implemented by the network device in various methods of the embodiments of the present application, which will not be repeated here again for brevity.

Optionally, the computer program may be applied in a mobile terminal/terminal device of an embodiment of the present application. When the computer program is run on a computer, the computer is enabled to perform corresponding processes implemented by the mobile terminal/terminal device in various methods of embodiments of the present application, and this will not be repeated here again for brevity.

Those of ordinary skill in the art will recognize that the exemplary elements and algorithm acts described in combination with embodiments disclosed herein may be implemented in electronic hardware, or a combination of computer software and electronic hardware. Whether these functions are implemented in hardware or software depends on the specific application and design constraints of the technical solution. Those skilled in the art may use different methods to implement the described functions in respect to each particular application, but such implementation should not be considered to be beyond the scope of the present application.

Those skilled in the art may clearly understand that for convenience and conciseness of description, the specific working processes of systems, apparatuses and units described above may refer to the corresponding processes in the method embodiments, and this will not be repeated here again.

In several embodiments provided by the present application, it should be understood that the disclosed systems, apparatuses and methods may be implemented in other ways. For example, the device embodiments described above are only illustrative, for example, the division of the units is only a logical function division, and there may be other division manners in actual implementation. For example, multiple units or components may be combined or integrated into another system, or some features may be ignored or not executed. On the other hand, the mutual coupling or direct coupling or communication connection shown or discussed may be indirect coupling or communication connection through some interfaces, apparatus or units, and may be in electrical, mechanical or other forms.

The unit described as a separate component may or may not be physically separated, and the component shown as a unit may or may not be a physical unit, i.e., it may be located in one place or may be distributed over multiple network units. Some or all of the units may be selected according to actual needs to achieve the purpose of the embodiments.

In addition, various functional units in various embodiments of the present application may be integrated in one processing unit, or the various units may be physically present separately, or two or more units may be integrated in one unit.

The functions may be stored in a computer readable storage medium if realized in a form of software functional units and sold or used as a separate product. Based on this understanding, the technical solution of the present application, in essence, or the part contributing to the prior art, or the part of the technical solution, may be embodied in the form of a software product stored in a memory medium, including a number of instructions for causing a computer device (which may be a personal computer, a server, or a network device and the like) to perform all or part of the acts of the method described in various embodiments of the present application. The aforementioned storage medium includes various media, such as a U disk, a removable hard disk, a Read-Only Memory (ROM), a Random Access Memory (RAM), a magnetic disk, or an optical disk, which are capable of storing program codes.

What are described above are merely exemplary embodiments of the present application, but the protection scope of the present application is not limited thereto. Any variation or substitution that may be easily conceived by a person skilled in the art within the technical scope disclosed by the present application shall be included within the protection scope of the present application. Therefore, the protection scope of the present application shall be subject to the protection scope of the claims.

## Claims

1. A method for wireless communication, comprising:
monitoring, by a terminal device, radio link quality on a plurality of reference signal (RS) resources through an RS; and
reporting, by the terminal device, one of an in sync indication (IS) and an out of sync indication (OOS), or one of the IS, the OOS and a third state unknown state (US), according to a result of radio link quality monitoring.

2. The method of claim 1, wherein reporting, by the terminal device, one of the IS, the OOS and the US according to the result of radio link quality monitoring comprises:
reporting, by a physical layer of the terminal device, the IS to a higher layer of the terminal device if the radio link quality is monitored to be better than a first threshold value on at least one RS resource of the plurality of RS resources; or
reporting, by the physical layer of the terminal device, the OOS to the higher layer of the terminal device if the radio link quality is monitored to be worse than a second threshold value on all RS resources of the plurality of RS resources and the radio link quality is monitored to be better than a third threshold value on at least one RS resource of the plurality of RS resources; or
reporting, by the physical layer of the terminal device, the US to the higher layer of the terminal device if the radio link quality is monitored to be worse than the third threshold value on all RS resources of the plurality of RS resources.

3. The method of claim 1, wherein reporting, by the terminal device, one of the IS, the OOS and the US according to the result of radio link quality monitoring comprises:
reporting, by a physical layer of the terminal device, the IS to a higher layer of the terminal device if at least one RS is detected in the plurality of RS resources and the radio link quality is monitored to be better than a first threshold value on the at least one RS resource; or
reporting, by the physical layer of the terminal device, the OOS to the higher layer of the terminal device if at least one RS is detected in the plurality of RS resources and the radio link quality is monitored to be worse than a second threshold value on all RS resources on which the RS is detected; or
reporting, by the physical layer of the terminal device, the US to the higher layer of the terminal device if no RS is detected in the plurality of RS resources.

4. The method of claim 1, wherein reporting, by the terminal device, one of the IS, the OOS and the US according to the result of radio link quality monitoring comprises:
reporting, by a physical layer of the terminal device, the IS to a higher layer of the terminal device if the radio link quality is monitored to be better than a first threshold value on at least one RS resource of the plurality of RS resources; or
reporting, by the physical layer of the terminal device, the OOS to the higher layer of the terminal device if the radio link quality is monitored to be worse than a second threshold value on all RS resources of the plurality of RS resources and the radio link quality is monitored to be better than a third threshold value on the all RS resources; or
reporting, by the physical layer of the terminal device, the US to the higher layer of the terminal device if the radio link quality is monitored to be worse than the second threshold value on all RS resources of the plurality of RS resources and the radio link quality is monitored to be worse than the third threshold value on at least one RS resource of the plurality of RS resources.

5. The method of claim 1, wherein reporting, by the terminal device, one of the IS, the OOS and the US according to the result of radio link quality monitoring comprises:
reporting, by a physical layer of the terminal device, the IS to a higher layer of the terminal device if at least one RS is detected in the plurality of RS resources and the radio link quality is monitored to be better than a first threshold value on the at least one RS resource; or
reporting, by the physical layer of the terminal device, the OOS to the higher layer of the terminal device if the RS is detected on all RS resources of the plurality of RS resources and the radio link quality is monitored to be worse than a second threshold value on the all RS resources; or
reporting, by the physical layer of the terminal device, the US to the higher layer of the terminal device if the RS is detected on partial RS resources of the plurality of RS resources and the radio link quality is monitored to be worse than the second threshold value on all RS resources on which the RS is detected.

6. The method of claim 1, wherein reporting, by the terminal device, one of the IS and the OOS according to the result of radio link quality monitoring comprises:
reporting, by a physical layer of the terminal device, the IS to a higher layer of the terminal device if the radio link quality is monitored to be better than a first threshold value on at least one RS resource of the plurality of RS resources; or
reporting, by the physical layer of the terminal device, the OOS to the higher layer of the terminal device if the radio link quality is monitored to be worse than a second threshold value on all RS resources of the plurality of RS resources and the radio link quality is monitored to be better than a third threshold value on at least one RS resource.

7. The method of claim 1, wherein reporting, by the terminal device, one of the IS and the OOS according to the result of radio link quality monitoring comprises:
reporting, by a physical layer of the terminal device, the IS to a higher layer of the terminal device if at least one RS is detected in the plurality of RS resources and the radio link quality is monitored to be better than a first threshold value on the at least one RS resource; or
reporting, by the physical layer of the terminal device, the OOS to the higher layer of the terminal device if at least one RS is detected in the plurality of RS resources and the radio link quality is monitored to be worse than a second threshold value on all RS resources on which the RS is detected.

8. The method of claim 1, wherein reporting, by the terminal device, one of the IS and the OOS according to the result of radio link quality monitoring comprises:
reporting, by a physical layer of the terminal device, the IS to a higher layer of the terminal device if the radio link quality is monitored to be better than a first threshold value on at least one RS resource of the plurality of RS resources; or
reporting, by the physical layer of the terminal device, the OOS to the higher layer of the terminal device if the radio link quality is monitored to be worse than a second threshold value on all RS resources of the plurality of RS resources and the radio link quality is monitored to be better than a third threshold value on the all RS resources.

9. The method of claim 1, wherein reporting, by the terminal device, one of the IS and the OOS according to the result of radio link quality monitoring comprises:
reporting, by a physical layer of the terminal device, the IS to a higher layer of the terminal device if at least one RS is detected in the plurality of RS resources and the radio link quality is monitored to be better than a first threshold value on the at least one RS resource; or
reporting, by the physical layer of the terminal device, the OOS to the higher layer of the terminal device if the RS is detected on all RS resources of the plurality of RS resources and the radio link quality is monitored to be worse than a second threshold value on the all RS resources.

10. The method of claim 3 or 5 or 7 or 9, wherein,
that at least one RS is detected in the plurality of RS resources comprises: a measured value of the at least one RS detected in the plurality of RS resources is greater than a fourth threshold value; or
that the RS is detected on all RS resources in the plurality of RS resources comprises a measured value of the RS detected on each of all RS resources in the plurality of RS resources is greater than the fourth threshold value.

11. The method of claim 10, wherein the fourth threshold value is preconfigured, or indicated by a network device through broadcast or radio resource control (RRC) signaling.

12. The method of claim 10 or 11, wherein the fourth threshold value is represented by a value of one of the following:
Block Error Rate (BLER), Signal to Interference plus Noise Ratio (SINR), Reference Signal Receiving Quality (RSRQ), Reference Signal Receiving Power (RSRP), and Received Signal Strength Indication (RSSI).

13. The method of claim 2 or 4 or 6 or 8, wherein at least one of the first threshold value, the second threshold value and the third threshold value is represented by a value of one of the following:
BLER, SINR, RSRQ, RSRP, and RSSI.

14. The method of claim 2 or 4 or 6 or 8, wherein at least one of the first threshold value, the second threshold value and the third threshold value is preconfigured, or indicated by a network device through broadcast or radio resource control (RRC) signaling.

15. The method of claim 2 or 4 or 6 or 8, wherein a plurality of first values are preconfigured at the terminal device, and one of the plurality of first values is indicated by a network device as at least one of the first threshold value, the second threshold value and the third threshold value through one of broadcast, RRC signaling, Medium Access Control Control Element (MAC CE) and Downlink Control Information (DCI).

16. The method of claims 3 or 5 or 7 or 9, wherein the first threshold value and/or the second threshold value is represented by a value of one of the following:
BLER, SINR, RSRQ, RSRP, and RSSI.

17. The method of claim 3 or 5 or 7 or 9, wherein the first threshold value and/or the second threshold value is preconfigured, or indicated by a network device through broadcast or RRC signaling.

18. The method of claim 3 or 5 or 7 or 9, wherein a plurality of first values are preconfigured at the terminal device, and one of the plurality of first values is indicated by a network device as the first threshold value and/or the second threshold value through one of broadcast, RRC signaling, MAC CE and DCI.

19. The method of any one of claims 2 to 18, wherein the method further comprises:
if the physical layer of the terminal device reports M USs and does not report the IS and/or OOS among the M USs, starting, by the terminal device, a first timer, wherein the first timer enters a timeout state after the first timer is started for a first time length; and
determining, by the terminal device, whether radio link failure (RLF) occurs according to the first timer.

20. The method of claim 19, wherein determining, by the terminal device, whether the RLF occurs according to the first timer comprises:
if the physical layer of the terminal device reports N ISs within the first time length and does not report the OOS and/or US among the N ISs, stopping, by the terminal device, the first timer and determining that the RLF does not occur; or
if the first timer times out, determining, by the terminal device, that the RLF occurs.

21. The method of claim 19, wherein determining, by the terminal device, whether the RLF occurs according to the first timer comprises:
if the physical layer of the terminal device reports N ISs within the first time length and the N ISs are consecutive, stopping, by the terminal device, the first timer and determining that the RLF does not occur; or
if the first timer times out, determining, by the terminal device, that the RLF occurs.

22. The method of claim 19, wherein determining, by the terminal device, whether the RLF occurs according to the first timer comprises:
if the physical layer of the terminal device reports N ISs and/or OOSs within the first time length and does not report the US among the N ISs and/or OOSs, stopping, by the terminal device, the first timer and determining that the RLF does not occur; or
if the first timer times out, determining, by the terminal device, that the RLF occurs.

23. The method of claim 19, wherein determining, by the terminal device, whether the RLF occurs according to the first timer comprises:
if the physical layer of the terminal device reports N ISs and/or OOSs within the first time length, stopping, by the terminal device, the first timer and determining that the RLF does not occur; or
if the first timer times out, determining, by the terminal device, that the RLF occurs.

24. The method of any one of claims 20 to 23, wherein if the first timer times out, the method further comprises:
determining, by the terminal device, that a first event has occurred, and reporting the first event, wherein the first event refers to detecting that the radio link quality is unknown or detecting that a radio link is currently unavailable; and
receiving, by the terminal device, first configuration information after reporting the first event, wherein the first configuration information is used for configuring a new bandwidth part (BWP) for the terminal device, or the first configuration information is used for indicating the terminal device to switch from a current BWP to a first BWP.

25. The method of claim 24, wherein if the first configuration information is used for configuring the new BWP for the terminal device, the method further comprises:
starting, by the terminal device, to work on the new BWP after receiving the first configuration information.

26. The method of claim 24, wherein if the first configuration information is used for indicating the terminal device to switch from the current BWP to the first BWP, the method further comprises:
switching, by the terminal device, from the current BWP to the first BWP after receiving the first configuration information.

27. The method of claim 26, wherein the first BWP is preconfigured, or the first BWP is an initial BWP.

28. The method of any one of claims 20 to 23, wherein if the first timer times out, the method further comprises:
determining, by the terminal device, that a first event has occurred, and reporting the first event, wherein the first event refers to detecting that the radio link quality is unknown or detecting that a radio link is currently unavailable; and
receiving, by the terminal device, second configuration information after reporting the first event, where the second configuration information is used for configuring a new carrier for the terminal device, or the second configuration information is used for indicating the terminal device to switch from a current carrier to a first carrier.

29. The method of claim 28, wherein if the second configuration information is used for configuring the new carrier for the terminal device, the method further comprises:
starting, by the terminal device, to work on the new carrier after receiving the second configuration information.

30. The method of claim 28, wherein if the first configuration information is used for indicating the terminal device to switch from the current carrier to the first carrier, the method further comprises:
switching, by the terminal device, from the current carrier to the first carrier after receiving the second configuration information.

31. The method of claim 30, wherein the first carrier is preconfigured, or the first carrier is a primary carrier.

32. The method ofany one of claims 20 to 31, wherein N is preconfigured, or indicated by a network device through broadcast or radio resource control (RRC) signaling.

33. The method of any one of claims 20 to 31, wherein a plurality of second values are preconfigured at the terminal device, and one of the plurality of first values is indicated by a network device as N through one of broadcast, RRC signaling, MAC CE and DCI.

34. The method of any one of claims 19 to 33, wherein M and/or the first time length is preconfigured, or indicated by a network device through broadcast or RRC signaling.

35. The method of any one of claims 19 to 33, wherein a plurality of third values are preconfigured at the terminal device, and one of the plurality of third values is indicated by a network device as M and/or the first time length through one of broadcast, RRC signaling, MAC CE and DCI.

36. The method of any one of claims 2 to 18, wherein the method further comprises:
if the physical layer of the terminal device reports P OOSs and does not report the IS among the P OOSs, starting, by the terminal device, a second timer, wherein the second timer enters a timeout state after the second timer is started for a second time length; and
determining, by the terminal device, whether radio link failure (RLF) occurs according to the second timer.

37. The method of any one of claims 2 to 18, wherein the method further comprises:
if the physical layer of the terminal device reports P OOSs and the P OOSs are consecutive, starting, by the terminal device, a second timer, wherein the second timer enters a timeout state after the second timer is started for a second time length; and
determining, by the terminal device, whether radio link failure (RLF) occurs according to the second timer.

38. The method of claim 36 or 37, wherein determining, by the terminal device, whether the RLF occurs according to the second timer comprises:
if the physical layer of the terminal device reports Q ISs within the second time length and does not report the OOS among the Q ISs, stopping, by the terminal device, the second timer and determining that the RLF does not occur; or
if the second timer times out, determining, by the terminal device, that the RLF occurs.

39. The method of claim 36 or 37, wherein determining, by the terminal device, whether the RLF occurs according to the second timer comprises:
if the physical layer of the terminal device reports Q ISs within the second time length and the Q ISs are consecutive, stopping, by the terminal device, the second timer and determining that the RLF does not occur; or
if the second timer times out, determining, by the terminal device, that the RLF occurs.

40. The method of claim 38 or 39, wherein Q is preconfigured, or indicated by a network device through broadcast or RRC signaling.

41. The method of claim 38 or 39, wherein a plurality of fourth values are preconfigured at the terminal device, and one of the plurality of fourth values is indicated by a network device as the Q through one of broadcast, RRC signaling, MAC CE and DCI.

42. The method of any one of claims 37 to 41, wherein P and/or the second time length is preconfigured, or indicated by a network device through broadcast or RRC signaling.

43. The method of any one of claims 37 to 41, wherein a plurality of fifth values are preconfigured at the terminal device, and one of the plurality of fifth values is indicated by a network device as P and/or the second time length through one of broadcast, RRC signaling, MAC CE and DCI.

44. The method of any one of claims 1 to 43, wherein before the terminal device monitors the radio link quality through the RS on the plurality of RS resources, the method further comprises:
receiving, by the terminal device, third configuration information, wherein the third configuration information is used for configuring the plurality of RS resources.

45. A terminal device, comprising:
a processing unit, configured to monitor radio link quality on a plurality of reference signal (RS) resources through an RS; and
a communication unit, configured to report one of an in sync indication (IS) and an out of sync indication (OOS), or one of the IS, the OOS and a third state unknown state (US), according to a result of radio link quality monitoring.

46. The terminal device of claim 45, wherein the communication unit is specifically configured to:
report, by a physical layer of the terminal device, the IS to a higher layer of the terminal device if the radio link quality is monitored to be better than a first threshold value on at least one RS resource of the plurality of RS resources; or
report, by the physical layer of the terminal device, the OOS to the higher layer of the terminal device if the radio link quality is monitored to be worse than a second threshold value on all RS resources of the plurality of RS resources and the radio link quality is monitored to be better than a third threshold value on at least one RS resource of the plurality of RS resources; or
report, by the physical layer of the terminal device, the US to the higher layer of the terminal device if the radio link quality is monitored to be worse than the third threshold value on all RS resources of the plurality of RS resources.

47. The terminal device of claim 45, wherein the communication unit is specifically configured to:
report, by a physical layer of the terminal device, the IS to a higher layer of the terminal device if at least one RS is detected in the plurality of RS resources and the radio link quality is monitored to be better than a first threshold value on the at least one RS resource; or
report, by the physical layer of the terminal device, the OOS to the higher layer of the terminal device if at least one RS is detected in the plurality of RS resources and the radio link quality is monitored to be worse than a second threshold value on all RS resources on which the RS is detected; or
report, by the physical layer of the terminal device, the US to the higher layer of the terminal device if no RS is detected in the plurality of RS resources.

48. The terminal device of claim 45, wherein the communication unit is specifically configured to:
report, by a physical layer of the terminal device, the IS to a higher layer of the terminal device if the radio link quality is monitored to be better than a first threshold value on at least one RS resource of the plurality of RS resources; or
report, by the physical layer of the terminal device, the OOS to the higher layer of the terminal device if the radio link quality is monitored to be worse than a second threshold value on all RS resources of the plurality of RS resources and the radio link quality is monitored to be better than a third threshold value on the all RS resources; or
report, by the physical layer of the terminal device, the US to the higher layer of the terminal device if the radio link quality is monitored to be worse than the second threshold value on all RS resources of the plurality of RS resources and the radio link quality is monitored to be worse than the third threshold value on at least one RS resource.

49. The terminal device of claim 45, wherein the communication unit is specifically configured to:
report, by a physical layer of the terminal device, the IS to a higher layer of the terminal device if at least one RS is detected in the plurality of RS resources and the radio link quality is monitored to be better than a first threshold value on the at least one RS resource; or
report, by the physical layer of the terminal device, the OOS to the higher layer of the terminal device if the RS is detected on all RS resources of the plurality of RS resources and the radio link quality is monitored to be worse than a second threshold value on the all RS resources; or
report, by the physical layer of the terminal device, the US to the higher layer of the terminal device if the RS is detected on partial RS resources of the plurality of RS resources and the radio link quality is monitored to be worse than the second threshold value on all RS resources on which the RS is detected.

50. The terminal device of claim 45, wherein the communication unit is specifically configured to:
report, by a physical layer of the terminal device, the IS to a higher layer of the terminal device if the radio link quality is monitored to be better than a first threshold value on at least one RS resource of the plurality of RS resources; or
report, by the physical layer of the terminal device, the OOS to the higher layer of the terminal device if the radio link quality is monitored to be worse than a second threshold value on all RS resources of the plurality of RS resources and the radio link quality is monitored to be better than a third threshold value on at least one RS resource.

51. The terminal device of claim 45, wherein the communication unit is specifically configured to:
report, by a physical layer of the terminal device, the IS to a higher layer of the terminal device if at least one RS is detected in the plurality of RS resources and the radio link quality is monitored to be better than a first threshold value on the at least one RS resource; or
report, by the physical layer of the terminal device, the OOS to the higher layer of the terminal device if at least one RS is detected in the plurality of RS resources and the radio link quality is monitored to be worse than a second threshold value on all RS resources on which the RS is detected.

52. The terminal device of claim 45, wherein the communication unit is specifically configured to:
report, by a physical layer of the terminal device, the IS to a higher layer of the terminal device if the radio link quality is monitored to be better than a first threshold value on at least one RS resource of the plurality of RS resources; or
report, by the physical layer of the terminal device, the OOS to the higher layer of the terminal device if the radio link quality is monitored to be worse than a second threshold value on all RS resources of the plurality of RS resources and the radio link quality is monitored to be better than a third threshold value on the all RS resources.

53. The terminal device of claim 45, wherein the communication unit is specifically configured to:
report, by a physical layer of the terminal device, the IS to a higher layer of the terminal device if at least one RS is detected in the plurality of RS resources and the radio link quality is monitored to be better than a first threshold value on the at least one RS resource; or
report, by the physical layer of the terminal device, the OOS to the higher layer of the terminal device if the RS is detected on all RS resources of the plurality of RS resources and the radio link quality is monitored to be worse than a second threshold value on the all RS resources.

54. The terminal device of claim 47 or 49 or 51 or 53, wherein,
that at least one RS is detected in the plurality of RS resources comprises: a measured value of the at least one RS detected in the plurality of RS resources is greater than a fourth threshold value; or
that the RS is detected on all RS resources in the plurality of RS resources comprises: a measured value of the RS detected on each of all RS resources in the plurality of RS resources is greater than the fourth threshold value.

55. The terminal device of claim 54, wherein the fourth threshold value is preconfigured, or indicated by a network device through broadcast or radio resource control (RRC) signaling.

56. The terminal device of claim 54 or 55, wherein the fourth threshold value is represented by a value of one of the following:
Block Error Rate (BLER), Signal to Interference plus Noise Ratio (SINR), Reference Signal Receiving Quality (RSRQ), Reference Signal Receiving Power (RSRP), and Received Signal Strength Indication (RSSI).

57. The terminal device of claims 46 or 48 or 50 or 52, wherein at least one of the first threshold value, the second threshold value and the third threshold value is represented by a value of one of the following:
BLER, SINR, RSRQ, RSRP, and RSSI.

58. The terminal device of claim 46 or 48 or 50 or 52, wherein at least one of the first threshold value, the second threshold value and the third threshold value is preconfigured, or indicated by a network device through broadcast or RRC signaling.

59. The terminal device of claim 46 or 48 or 50 or 52, wherein a plurality of first values are preconfigured at the terminal device, and one of the plurality of first values is indicated by a network device as at least one of the first threshold value, the second threshold value and the third threshold value through one of broadcast, RRC signaling, Medium Access Control Control Element (MAC CE) and Downlink Control Information (DCI).

60. The terminal device of claim 47 or 49 or 51 or 53, wherein the first threshold value and/or the second threshold value is represented by a value of one of the following:
BLER, SINR, RSRQ, RSRP, and RSSI.

61. The terminal device of claim 47 or 49 or 51 or 53, wherein the first threshold value and/or the second threshold value is preconfigured, or indicated by a network device through broadcast or RRC signaling.

62. The terminal device of claims 47 or 49 or 51 or 53, wherein a plurality of first values are preconfigured at the terminal device, and one of the plurality of first values is indicated by a network device as the first threshold value and/or the second threshold value through one of broadcast, RRC signaling, MAC CE and DCI.

63. The terminal device of any one of claims 46 to 62, wherein the processing unit is further configured to:
if the physical layer of the terminal device reports M USs and does not report the IS and/or OOS among the M USs, start a first timer, wherein the first timer enters a timeout state after the first timer is started for a first time length; and
determine whether radio link failure (RLF) occurs according to the first timer.

64. The terminal device of claim 63, wherein the processing unit is specifically configured to:
if the physical layer of the terminal device reports N ISs within the first time length and does not report the OOS and/or US among the N ISs, stop the first timer and determine that the RLF does not occur; or
if the first timer times out, determine that the RLF occurs.

65. The terminal device of claim 63, wherein the processing unit is specifically configured to:
if the physical layer of the terminal device reports N ISs within the first time length and the N ISs are consecutive, stop the first timer and determine that the RLF does not occur; or
if the first timer times out, determine that the RLF occurs.

66. The terminal device of claim 63, wherein the processing unit is specifically configured to:
if the physical layer of the terminal device reports N ISs and/or OOSs within the first time length and does not report the US among the N ISs and/or OOSs, stop the first timer and determine that the RLF does not occur; or
if the first timer times out, determine that the RLF occurs.

67. The terminal device of claim 63, wherein the processing unit is specifically configured to:
if the physical layer of the terminal device reports N ISs and/or OOSs within the first time length, stop the first timer and determine that the RLF does not occur; or
if the first timer times out, determine that the RLF occurs.

68. The terminal device of any one of claims 64 to 67, wherein if the first timer times out,
the processing unit is further configured to determine that a first event has occurred, and control the communication unit to report the first event, wherein the first event refers to detecting that the radio link quality is unknown or detecting that a radio link is currently unavailable; and
after the communication unit reports the first event, the communication unit is further configured to receive first configuration information, wherein the first configuration information is used for configuring a new bandwidth part (BWP) for the terminal device, or the first configuration information is used for indicating the terminal device to switch from a current BWP to a first BWP.

69. The terminal device of claim 68, wherein if the first configuration information is used for configuring the new BWP for the terminal device,
after the communication unit receives the first configuration information, the processing unit is further configured to determine to start to work on the new BWP.

70. The terminal device of claim 68, wherein if the first configuration information is used for indicating the terminal device to switch from the current BWP to the first BWP,
after the communication unit receives the first configuration information, the processing unit is further configured to determine to switch from the current BWP to the first BWP.

71. The terminal device of claim 70, wherein the first BWP is preconfigured, or the first BWP is an initial BWP.

72. The terminal device of any one of claims 64 to 67, wherein if the first timer times out,
the processing unit is further configured to determine that a first event has occurred, and control the communication unit to report the first event, wherein the first event refers to detecting that the radio link quality is unknown or detecting that a radio link is currently unavailable; and
after the communication unit reports the first event, the communication unit is further configured to receive second configuration information, wherein the second configuration information is used for configuring a new carrier for the terminal device, or the second configuration information is used for indicating the terminal device to switch from a current carrier to a first carrier.

73. The terminal device of claim 72, wherein if the second configuration information is used for configuring the new carrier for the terminal device,
after the communication unit receives the second configuration information, the processing unit is further configured to determine to start to work on the new carrier.

74. The terminal device of claim 72, wherein if the first configuration information is used for indicating the terminal device to switch from the current carrier to the first carrier,
after the communication unit receives the second configuration information, the processing unit is further configured to determine to switch from the current carrier to the first carrier.

75. The terminal device of claim 74, wherein the first carrier is preconfigured, or the first carrier is a primary carrier.

76. The terminal device of any one of claims 64 to 75, wherein N is preconfigured, or indicated by a network device through broadcast or RRC signaling.

77. The terminal device of any one of claims 64 to 75, wherein a plurality of second values are preconfigured at the terminal device, and one of the plurality of first values is indicated by a network device as N through one of broadcast, RRC signaling, MAC CE and DCI.

78. The terminal device of any one of claims 63 to 77, wherein M and/or the first time length is preconfigured, or indicated by a network device through broadcast or RRC signaling.

79. The terminal device of any one of claims 63 to 77, wherein a plurality of third values are preconfigured at the terminal device, and one of the plurality of third values is indicated by a network device as M and/or the first time length through one of broadcast, RRC signaling, MAC CE and DCI.

80. The terminal device of any one of claims 46 to 62, wherein the processing unit is further configured to:
if the physical layer of the terminal device reports P OOSs and does not report the IS among the P OOSs, start a second timer, wherein the second timer enters a timeout state after the second timer is started for a second time length; and
determine whether radio link failure (RLF) occurs according to the second timer.

81. The terminal device of any one of claims 46 to 62, wherein the processing unit is further configured to:
if the physical layer of the terminal device reports P OOSs and the P OOSs are consecutive, start a second timer, wherein the second timer enters a timeout state after the second timer is started for a second time length; and
determine whether radio link failure (RLF) occurs according to the second timer.

82. The terminal device of claim 80 or 81, wherein the processing unit is specifically configured to:
if the physical layer of the terminal device reports Q ISs within the second time length and does not report the OOS among the Q ISs, stop the second timer and determine that the RLF does not occur; or
if the second timer times out, determine that the RLF occurs.

83. The terminal device of claim 80 or 81, wherein the processing unit is specifically configured to:
if the physical layer of the terminal device reports Q ISs within the second time length and the Q ISs are consecutive, stop the second timer and determine that the RLF does not occur; or
if the second timer times out, determine that the RLF occurs.

84. The terminal device of claim 82 or 83, wherein Q is preconfigured, or indicated by a network device through broadcast or RRC signaling.

85. The terminal device of claim 82 or 83, wherein a plurality of fourth values are preconfigured at the terminal device, and one of the plurality of fourth values is indicated by a network device as the Q through one of broadcast, RRC signaling, MAC CE and DCI.

86. The terminal device of any one of claims 81 to 85, wherein P and/or the second time length is preconfigured, or indicated by a network device through broadcast or RRC signaling.

87. The terminal device of any one of claims 81 to 85, wherein a plurality of fifth values are preconfigured at the terminal device, and one of the plurality of fifth values is indicated by a network device as P and/or the second time length through one of broadcast, RRC signaling, MAC CE and DCI.

88. The terminal device of any one of claims 45 to 87, wherein before the processing unit monitors the radio link quality through the RS on the plurality of RS resources, the communication unit is further configured to receive third configuration information for configuring the plurality of RS resources.

89. A terminal device, comprising: a processor and a memory, wherein the memory is configured to store a computer program, and the processor is configured to call and run the computer program stored in the memory to perform the method according to any one of claims 1 to 45.

90. A chip, comprising a processor configured to call and run a computer program from a memory, to enable a device with the chip installed therein to perform the method according to any one of claims 1 to 45.

91. A computer readable storage medium, storing a computer program, wherein the computer program enables a computer to perform the method according to any one of claims 1 to 45.

92. A computer program product, comprising computer program instructions, wherein the computer program instructions enable a computer to perform the method according to any one of claims 1 to 45.

93. A computer program, wherein the computer program enables a computer to perform the method according to any one of claims 1 to 45.
